(19) Europäisches Patentamt
European Patent Office
Office européen des brevets

(11) **EP 4 386 025 A1**

(12) **EUROPÄISCHE PATENTANMELDUNG**

(43) Veröffentlichungstag:
**19.06.2024  Patentblatt 2024/25**

(21) Anmeldenummer: **22213726.7**

(22) Anmeldetag: **15.12.2022**

(51) Internationale Patentklassifikation (IPC):
**C08G 18/08** *(2006.01)*  **C08G 18/10** *(2006.01)*
**C08G 18/32** *(2006.01)*  **C08G 18/76** *(2006.01)*
**B01J 19/00** *(2006.01)*  **C08G 18/71** *(2006.01)*

(52) Gemeinsame Patentklassifikation (CPC):
(C-Sets verfügbar)
**C08G 18/0895; B01J 19/0093; C08G 18/10;
C08G 18/3275; C08G 18/715; C08G 18/7671;**
B01J 2219/00792; B01J 2219/00822;
B01J 2219/00833; B01J 2219/0086;
B01J 2219/00867; B01J 2219/00873;
B01J 2219/00889; B01J 2219/00896        (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Aurotec GmbH**
**4844 Regau (AT)**

(72) Erfinder:
• **AIGNER, Paul**
**4860 Lenzing (AT)**
• **MUGRAUER, Christoph Manuel**
**4062 Kirchberg-Thening (AT)**
• **ZIKELI, Stefan**
**4844 Regau (AT)**

(74) Vertreter: **SONN Patentanwälte GmbH & Co KG**
**Riemergasse 14**
**1010 Wien (AT)**

(54) **VERFAHREN UND MODULARER REAKTOR ZUR HERSTELLUNG EINES PREPOLYMERS**

(57)    Die Erfindung betrifft ein kontinuierliches Verfahren zur Herstellung eines Prepolymers in einem Reaktor mit einem länglichen Hohlkörper, wobei mindestens zwei Edukte an einem Ende einer Reaktionszone des Hohlkörpers kontinuierlich eingeführt werden, die mindestens zwei Edukte in der Reaktionszone miteinander polymerisiert werden und Prepolymer an einem anderen Ende der Reaktionszone ausgeführt wird, wobei der längliche Hohlkörper in der Reaktionszone mindestens einen ersten und einen zweiten Teilbereich aufweist, wobei der Hohlkörper im zweiten Teilbereich einen Innendurchmesser hat, der um mindestens 10% größer ist als der Innendurchmesser des Hohlkörpers im ersten Teilbereich und der zweite Teilbereich eine Länge hat, die größergleich der Länge des ersten Teilbereichs ist; sowie einen Reaktor für ein solches Verfahren.

EP 4 386 025 A1

(52) Gemeinsame Patentklassifikation (CPC): (Forts.)

C-Sets
**C08G 18/10, C08G 18/282;**
**C08G 18/10, C08G 18/3206;**
**C08G 18/10, C08G 18/3275**

**Beschreibung**

Die vorliegende Erfindung betrifft ein kontinuierliches Verfahren zur Herstellung von Polyurethan Prepolymeren.

**Hintergrund der Erfindung**

Prepolymere sind reaktive Oligomere oder kurzkettige Polymere, die zur Herstellung von langkettigen Polymeren dienen. Sie sind Vorprodukte, die im Gegensatz zum Endprodukt noch löslich oder leicht schmelzbar sind. Prepolymere erlauben die Herstellung von Blockcopolymeren oder eine formgebende Verarbeitung, bevor eine Verfestigung durch Vernetzung oder fortschreitender Polymerisation zu einem festeren Zustand führt. Sinngemäß kann ein Prepolymer auch ein fertiges Polymer mit geringer Molmassen sein. Fertige Prepolymere mit geringen Molmassen werden häufig als Stabilisatoren oder Hilfsmittel eingesetzt.

Unterschiedliche Bedingungen bei der Produktion der Prepolymere ermöglichen ein breites Spektrum von mechanischen Eigenschaften. Das reicht von weichen elastischen Schäumen und Fasern bis hin zu festen Formteilen mit hoher Schlagfestigkeit. Das zeigt den bereits sehr großen Anwendungsbereich der sich kontinuierlich weiterentwickelt.

Ein Verfahren zur kontinuierlichen Herstellung von Prepolymeren ist beispielsweise in der WO 2007/037824 A2 offenbart.

EP 1391472 A1 beschreibt ein Verfahren zur kontinuierlichen Herstellung von thermoplastisch verarbeitbaren Polyurethanen, bei dem mindestens zwei unterschiedliche Polyole und Kettenverlängerer in Kombination mit einem Isocyanat zum Einsatz kommen. Polyurethane können schrittweise (Prepolymerdosierverfahren) oder durch die gleichzeitige Reaktion aller Komponenten in einer Stufe (one-shot-Dosierverfahren) erzeugt werden. Zum Einsatz kommt dabei ein kontinuierlich betriebener Extruder, wie auch in WO 2007/101807 A1 oder WO 2021/122303 A1 beschrieben. Ziel ist hier direkt das fertige Formteil herzustellen. Mit dem Extruder gehen hohe Temperaturen um 150-300 °C einher. Derartige hohen Temperaturen sind für eine präzise Einstellung der Eigenschaften bei Prepolymeren nachteilig.

Polyurethane sind Produkte die bei der Polyaddition aus meist (poly)Isocyanaten mit (poly)Alkoholen entstehen. Die Verbindungseinheit dabei ist die Urethangruppe. Die Urethangruppe kann auch Sequenzen anderer funktioneller Gruppen (Polyester, Polyether, oder andere) miteinander verbinden. Bei der Polymerisation von Polyurethanen können neben der Urethangruppe auch je nach Edukt (gezielt) Urea-, Imid-, Amid- oder Isocyanuratgruppen entstehen.

US 7,795,359 beschreibt die kontinuierliche Produktion diverser Prepolymere in einem Mikroreaktor in Spiralform mit einem Mikromischer. Zur Vermeidung von hochmolekularen Polymeren wird eine Ultraschallbehandlung vorgenommen. Die Spiralform führt zu einem hohen Druckverlust und limitiert die Reaktionssteuerung, wie zur Einstellung einer bestimmten Produktzusammensetzung oder -viskosität.

EP 2287228 A2 beschreibt die Herstellung eines silylierten Prepolymers. Für die Synthese wird ein Rohrreaktor mit einem internen statischen Mischer beschrieben. Dabei können mehrere Reaktoren in Serie geschaltet werden, wobei zwischen den Reaktoren Katalysatoren oder silylierende Reagenzien eingespeist werden. Als Reaktordimension wird ein Längen/Durchmesser Verhältnis von 10:1 bis 50:1 genannt. Die Reaktionstemperatur ist zwischen 80 und 200 °C. Über die genauen Reaktorgrößen wird auch in den Beispielen keine Angabe gemacht, ebenso wenig wie zu charakteristischen Produkteigenschaften, wie zu Molmasse und Molmassenverteilung.

Um die Produktgüte etwas besser steuern zu können werden in WO 2021/122284 A1 Kreisreaktoren verwendet. Hier wird ein Teilstrom wieder zurück in den Reaktor geführt. Gleichzeitig wird kontinuierlich Produkt abgezogen. Dadurch ist es möglich zumindest teilweise die Produktqualität zu beeinflussen. Die Einflussmöglichkeiten auf die gesamte Produktgüte ist jedoch begrenzt.

Bisherige Reaktorsysteme zeigen Nachteile bei unterschiedlichen und schlecht justierbaren Produkteigenschaften, schädlichen Nebenreaktionen, die zur Gelbildung und ggf. zur Reaktorverblockung nach wiederholten Experimenten führen.

**Zusammenfassung der Erfindung**

Es ist ein Ziel der vorliegenden Erfindung die Prozesskontrolle, gleichmäßige Produkteigenschaften (reproduzierbare Einstellung gewünschter Produkt-Molmasse und Molmassenverteilung) und Probleme mit Nebenprodukten, die zu Reaktorwartungsaufwand führt, zu verbessern. Es ist weiters ein Ziel der vorliegenden Erfindung einen skalierbaren Prozess zur Herstellung von Prepolymeren, insbesondere Polyurethan Prepolymeren, zur Verfügung zu stellen, der eine hohe Ausbeute, geringe bis keine Neben- und Abbauprodukte und eine effiziente Umwandlung ermöglicht.

Die Erfindung betrifft ein kontinuierliches Verfahren zur Herstellung eines Prepolymers in einem Reaktor mit einem länglichen Hohlkörper, wobei mindestens zwei Edukte an einem Ende einer Reaktionszone des Hohlkörpers kontinuierlich eingeführt werden, die mindestens zwei Edukte in der Reaktionszone miteinander polymerisiert werden und Prepolymer an einem anderen Ende der Reaktionszone ausgeführt wird, wobei der längliche Hohlkörper in der Reaktionszone mindestens einen ersten und einen zweiten Teilbereich aufweist, wobei der Hohlkörper im zweiten Teilbereich einen Innendurchmesser hat, der um mindestens 10% größer ist als der Innendurchmesser des Hohlkörpers im ersten Teilbereich und der zweite Teilbereich eine Länge hat, die größer-gleich der Länge des ersten Teilbereichs ist.

Vorzugsweise in allen Ausführungsformen der Erfindung ist das Prepolymer ein Polyurethan-Prepolymer. Dabei weist eines der Edukte mindestens eine Alkohol-Gruppe und eines der Edukte mindestens eine Isocyanat-Gruppe auf. Im speziellen betrifft die Erfindung daher ein kontinuierliches Verfahren zur Herstellung eines Polyurethan-Prepolymers in einem Reaktor mit einem länglichen Hohlkörper, wobei mindestens zwei Edukte an einem Ende einer Reaktionszone des Hohlkörpers kontinuierlich eingeführt werden, die mindestens zwei Edukte in der Reaktionszone polymerisiert werden und Prepolymer an einem anderen Ende der Reaktionszone ausgeführt wird, wobei eines der Edukte mindestens eine Alkohol-Gruppe und eines der Edukte mindestens eine IsocyanatGruppe aufweist, wobei der längliche Hohlkörper in der Reaktionszone mindestens einen ersten und einen zweiten Teilbereich aufweist, wobei der Hohlkörper im zweiten Teilbereich einen Innendurchmesser hat, der um mindestens 10% größer ist als der Innendurchmesser des Hohlkörpers im ersten Teilbereich und der zweite Teilbereich eine Länge hat, die größer-gleich der Länge des ersten Teilbereichs ist.

Weiters betrifft die Erfindung ein kontinuierliches Verfahren zur Herstellung eines Polyurethan-Prepolymers in einem Reaktor mit einem länglichen Hohlkörper, wobei mindestens zwei Edukte an einem Ende einer Reaktionszone des Hohlkörpers kontinuierlich eingeführt werden, die mindestens zwei Edukte in der Reaktionszone polymerisiert werden und Prepolymer an einem anderen Ende der Reaktionszone ausgeführt wird, wobei eines der Edukte mindestens eine Alkohol-Gruppe und mindestens eines der Edukte eine Isocyanat-Gruppe aufweist,

wobei der Reaktor mit einer Temperatur (T), einer Verweilzeit (t), und einem optionalen molaren Überschuss eines Edukts (c) betrieben wird, sodass ein angepeiltes mittleres Molekulargewicht des Prepolymers von 5000 Da bis 80000 Da gemäß der Formel

$$M_k(T, t, c) = A_T * e^{K_T * T} + A_t * t - A_c * c$$

wobei
$M_k(T,t,c)$ ist das angepeilte mittlere Molekulargewicht des Prepolymers,
A(T) ist 0,00039 Da,
K (T) ist 0,05733 K$^{-1}$,
A(t) ist 1354 Da min$^{-1}$,
A(c) ist 534 Da mol$^{-1}$,
T ist die Temperatur in K,
t ist die Verweilzeit in min,
c ist der molare Überschuss eines Edukts in mol%,
erhalten wird.

Weiters betrifft die Erfindung einen Reaktor geeignet zur Durchführung eines erfindungsgemäßen Verfahrens, wobei der Reaktor einen länglichen Hohlkörper hat, mit einem Einlass an einem Ende und einem Auslass an einem anderen Ende des Hohlkörpers, wobei der längliche Hohlkörper mindestens einen ersten und einen zweiten Teilbereich aufweist, wobei der Hohlkörper im ersten Teilbereich einen Innendurchmesser von <2,2 mm hat und der Hohlkörper im zweiten Teilbereich einen Innendurchmesser von ≥2,2 mm hat, wobei der Hohlkörper im zweiten Teilbereich einen Innendurchmesser hat, der um mindestens 10% größer ist als der Innendurchmesser des Hohlkörpers im ersten Teilbereich, der erste und zweite Teilbereich unabhängig voneinander jeweils eine Länge von ≥ 1 m haben, und der zweite Teilbereich eine Länge hat, die grö-βer-gleich der Länge des ersten Teilbereichs ist.

Alle diese Aspekte der Erfindung sind mit einander kombinierbar, z.B. können Beschreibungen des erfindungsgemäßen Verfahrens als Eignungen des erfindungsgemäßen Reaktors darstellen. Der Rektor kann im erfindungsgemäßen Verfahren verwendet werden. Daher betrifft die folgende detaillierte Beschreibung sowohl das Verfahren als auch den Reaktor, auch wenn nur auf einen der beiden Aspekte explizit Bezug genommen wird.

## Detaillierte Beschreibung der Erfindung

Die Erfindung betrifft ein kontinuierliches Verfahren zur Herstellung eines Prepolymers in einem Reaktor mit einem länglichen Hohlkörper. Der Reaktor wird auch als Mikroreaktor bezeichnet, denn der längliche Hohlkörper sind in der Regel dünne Rohre oder Schläuche, d.h. Hohlkörper mit einer um ein Vielfaches grö-βeren Länge als Breite/Durchmesser, z.B. mit einem Länge-zu-Breite (oder Durchmesser) Verhältnis von 50:1 bis 20000:1, insbesondere 100:1 bis 10000:1, oder 200:1 bis 5000:1, speziell bevorzugt 400:1 bis 2000:1. Dieses Verhältnis soll insbesondere in einer Reaktorzone des Hohlkörpers vorliegen. Bei gestaffelten Breiten/Durchmessern in Teilbereichen wird die Breite/Durchmesser des jeweiligen Teilbereichs aliquot der Länge des Teilbereiches zur Gesamtlänge des Hohlkörpers bzw. der Reaktorzone bzw. der Durchschnitt der Breite/Durchmesser herangezogen.

Die Rohre können unterschiedliche Querschnitte haben, z.B. rund, eleatisch rechteckig, quadratisch und Mischformen davon.

Die Rohre sind im Wesentlichen rund, zylinderförmig oder prismenförmig, i.e. in einem Teilbereich mit gegebener Breite/Durchmesser soll diese Breite/Durchmesser konstant bleiben. Mischelemente, z.B. durch Rohrquetschungen werden vermieden, z.B. sind auf weniger als 5% der Länge, vorzugsweise weniger als 1% der Länge des Hohlkörpers bzw. der Reaktorzone vorhanden oder werden gänzlich vermieden. Der Holkörper kann hingegen gebogen sein, um z.B. den Reaktor kompakt unterzubringen.

Der Einfachheit halber wird hierin der Begriff "Innendurchmesser" für die innere Breite oder den Durchmesser des Hohlkörpers verwendet, wobei die Durchschnittsdimension im Querschnitt des Hohlkörpers gemeint ist, wobei die Form unterschiedlich sein kann, wie oben genannt rund, elliptisch, rechteckig, quadratisch und Mischformen davon. D.h. bei Nennung eines Durchmessers im Folgenden wird darunter auch eine Beschreibung der Breite gemeint, ohne Einschränkung auf eine kreisrunde Querschnittsform, es sei denn, dies wird explizit genannt. Erfindungsgemäß sind Querschnittsgrößen umfasst, welche die gleiche Querschnittsfläche haben, wie die Querschnittsfläche bei einem angegebenen Durchmesser, wie einem Innendurchmesser, bei kreisförmigem Querschnitt.

In erfindungsgemäßen Verfahren werden mindestens zwei Edukte an einem Ende einer Reaktionszone des Hohlkörpers kontinuierlich eingeführt werden, die mindestens zwei Edukte werden in der Reaktionszone zu Prepolymer polymerisiert und Prepolymer wird an einem anderen Ende der Reaktionszone ausgeführt.

Der längliche Hohlkörper soll in der Reaktionszone mindestens einen ersten und einen zweiten Teilbereich aufweisen, wobei der Hohlkörper im zweiten Teilbereich einen Innendurchmesser hat, der um mindestens 10% größer ist als der Innendurchmesser des Hohlkörpers im ersten Teilbereich und der zweite Teilbereich eine Länge hat, die größer-gleich der Länge des ersten Teilbereichs ist.

Die beiden Edukte werden üblicherweise zu Beginn der Reaktionszone im Reaktor gemischt, sodass sie erst hier miteinander reagieren können. In anderen Fällen können sie schon vorher gemischt werden, i.e. wenn sie nach dem Mischen noch nicht sofort reagieren, z.B. im Fall wenn erst in der Reaktionszone die Bedingungen für eine Reaktion geschaffen werden, z.B. durch eine erforderliche, höhere Temperatur und oder die Anwesenheit eines Katalysators.

In besonders bevorzugten Fällen ist das Prepolymer ein Polyurethan-Prepolymer. Zur Herstellung von Polyurethan hat vorzugsweise mindestens eines der Edukte mindestens eine Alkohol-Gruppe, vorzugsweise zwei oder mehr, und mindestens eines der Edukte mindestens eine Isocyanat-Gruppe, vorzugsweise zwei oder mehr. Vorzugsweise wird ein Edukt mit zwei Alkohlgruppen und ein Edukt mit zwei Isocyanat-Gruppen eingesetzt. Zusätzliche Edukte mit drei oder mehr Alkoholgruppen und/oder drei oder mehr Isocyanat-Gruppen können als Quervernetzer zugefügt werden, vorzugsweise in geringerer Menge als die Edukte mit zwei Alkohol- bzw. zwei Isocyanatgruppen.

Die Erfindung betrifft weiters einen Reaktor geeignet zur Durchführung eines erfindungsgemäßen Verfahrens. Ein bevorzugter erfindungsgemäßer Reaktor hat einen länglichen Hohlkörper mit einem Einlass an einem Ende und einem Auslass an einem anderen Ende des Hohlkörpers. Der Hohlkörper hat einen gestaffelten Innendurchmesser, i.e. mindestens zwei Teilbereiche mit unterschiedlichem Innendurchmesser. Der längliche Hohlkörper weist mindestens einen ersten und einen zweiten Teilbereich auf, wobei vorzugsweise der Hohlkörper im ersten Teilbereich einen Innendurchmesser von < (kleiner als) 2,2 mm hat und der Hohlkörper im zweiten Teilbereich einen Innendurchmesser von ≥ (größer-gleich als) 2,2 mm hat, wobei der Hohlkörper im zweiten Teilbereich einen Innendurchmesser hat, der um mindestens 10% größer ist als der Innendurchmesser des Hohlkörpers im ersten Teilbereich. Weiters haben vorzugsweise der erste und zweite Teilbereich unabhängig voneinander jeweils eine Länge von ≥ (größer-gleich als) 1 m. Der zweite Teilbereich hat eine Länge, die größer-gleich der Länge des ersten Teilbereichs ist. Der Reaktor kann mit oder ohne den vorzugsweisen Merkmalen für das erfindungsgemäße Verfahren eingesetzt werden. Diese angegebenen Durchmesser und Längen der Teilbereiche ermöglichen eine besonders bevorzugte Durchführung der Herstellung von Prepolymeren, mit reduzierten Nebenreaktionen und dem Vorteil von geringeren Verblockungen des Reaktors, der damit von einer höheren Wiederbenutzbarkeit ohne zwischenzeitigem Spülen profitiert.

Vorzugsweise ist im zweiten Teilbereich der Innendurchmesser mindestens um 20%, vorzugsweise mindestens 30%, speziell bevorzugt mindestens 40%, besonders bevorzugt mindestens 50%, größer als der Innendurchmesser des ersten Teilbereichs. Eine derartige Vergrößerung des Innendurchmessers im zweiten Teilbereich im Vergleich zum ersten Teilbereich ist mit besonders ausgeprägten Vorteilen, wie oben beschrieben, verbunden.

Vorzugsweise ist der zweite Teilbereich länger als der erste Teilbereich. Insbesondere bevorzugt hat der zweite Teilbereich eine Länge, die um mindestens 10% größer ist als die Länge des ersten Teilbereichs. Vorzugsweise ist der Teilbereich um mindestens 20%, speziell bevorzugt, mindestens 40%, oder mindestens 60% oder sogar mindestens 80%, länger als der erste Teilbereich.

Grundsätzlich beschreiben die genannten Teilbereiche Längenbereiche im länglichen Hohlkörper, die zueinander die genannten relativen Dimensionen aufweisen. Diese Teilbereiche können grundsätzlich an beliebiger Stelle im Hohlkörper positioniert sein. Dabei wird der erste Teilbereich vor dem zweiten Teilbereich positioniert, sodass es im Verlauf vom Einlass zur Ausfuhr/Auslass zu einer Verbreiterung des Innendurchmessers kommt. Bevorzugt ist der erste Teilbereich beim Einlass in die Reaktionszone. Alternativ oder damit kombiniert ist der zweite Teilbereich bei der Ausfuhr aus der Reaktionszone.

Gemäß den Angaben zum ersten und zweiten Teilbereich kann der Innendurchmesser diese zwei Innendurchmesser-Staffelungen aufweisen. In weiteren Ausführungsformen weist der Innendurchmesser über die Länge der Reaktionszone mindestens 3 Durchmesser-Staffelungen auf. Dabei bilden die genannten ersten und zweiten Teilbereiche Bereiche in diesen mindestens 3 Staffelungen. Dabei kann der erste und/oder zweite Teilbereich einen oder mehrere Unterbereiche aufweisen, um weitere Durchmesser-Staffelungen zu bilden. Dabei erfüllt der gesamte Teilbereich mitsamt dem Unterbereich die genannten relativen oder absoluten Dimensionen (z.B. Innendurchmesser größer oder kleiner als im genannten anderen Teilbereich). Alternativ oder in Kombination dazu, kann ein weiterer Teilbereich vorgesehen werden, der andere Dimensionen als die soweit spezifizierten, aufweist. Z.B. ein Zwischenteilbereich (oder "mittlerer Teilbereich") zwischen dem ersten und zweiten Teilbereich, der andere als die genannten Größenunterschiede zu den anderen, insb. ersten und zweiten Teilbereich, aufweist. Dabei soll jedoch stets der Innendurchmesser vom Einlass zum Auslass zunehmen, d.h. ein zwischenliegender Teilbereich soll keinen kleineren Innendurchmesser aufweisen als ein zuvor (in Richtung Einlass) liegender Teilbereich und keinen größeren Innendurchmesser als ein nachfolgender (in Richtung Auslass) liegender Teilbereich. Ein solcher zwischenliegender Teilbereich, oder auch mittlerer Teilbereich genannt, kann zwischen dem ersten und dem zweiten Teilbereich vorgesehen sein, wobei der mittlere Teilbereich einen Innendurchmesser hat, der größer ist als der Innendurchmesser des ersten Teilbereichs und kleiner ist als der Innendurchmesser des zweiten Teilbereichs. Vorzugsweise hat der mittlere Teilbereich eine Länge von mind. 30 cm. Der Innendurchmesser des mittleren Teilbereichs kann mind. 5%, vorzugsweise mind. 10%, größer sein, als der Innendurchmesser des ersten Teilbereichs; der Innendurchmesser des zweiten Teilbereichs kann mind. 5%, vorzugsweise mind. 10%, größer sein, als der Innendurchmesser des mittleren Teilbereichs.

In bevorzugten Ausführungsformen weist der zweite Teilbereich Unterteilbereiche mit mindestens zwei unterschiedlichen Innendurchmessern auf, wobei ein zum ersten Teilbereich näher liegender Unterteilbereich (in Richtung Einlass liegend) einen kleineren Innendurchmesser aufweist als ein Unterteilbereich der weiter vom ersten Teilbereich (in Richtung Auslass liegend) liegt. Vorzugsweise hat jeder der Unterteilbereiche eine Länge von mind. 30 cm.

In bevorzugten Ausführungsformen weist der erste Teilbereich Unterteilbereiche mit mindestens zwei unterschiedlichen Innendurchmessern auf, wobei ein zum zweiten Teilbereich näher liegender Unterteilbereich (in Richtung Auslass) einen größeren Innendurchmesser aufweist als ein Unterteilbereich der weiter vom zweiten Teilbereich (in Richtung Einlass) liegt. Vorzugsweise hat jeder der Unterteilbereiche eine Länge von mind. 30 cm.

Weitere Staffelungen mit zwischenliegenden Innendurchmessern sind möglich.

Vorzugsweise weist die Reaktionszone eine Länge von mindestens 50 cm, vorzugsweise von mindestens 1 m, auf. Ebenso bevorzugt hat der Hohlkörper im ersten Teilbereich einen Innendurchmesser von <2,2 mm, vorzugsweise von <2,0 mm, und/oder der Hohlkörper hat im zweiten Teilbereich einen Innendurchmesser von ≥2,2 mm, vorzugsweise von ≥ 2,6 mm. Beispielsweise kann der Innendurchmesser im ersten Teilbereich 1,4 mm bis 2,1 mm und der Innendurchmesser im zweiten Teilbereich 2,2 mm bis 18 mm sein. Die Teilbereiche erfüllen die Durchmesserangaben über ihre gesamte Länge. Selbstverständlich wird das relative Erfordernis eines um mindestens 10% größeren Durchmessers weiterhin erfüllt. D.h. bei einem Innendurchmesser von 2,1 mm im ersten Teilbereich ist der Innendurchmesser im zweiten Teilbereich mind. 2,31 mm.

Vorzugsweise hat die Reaktionszone ein Volumen von mindestens 25 ml, vorzugsweise von mindestens 100 ml, insbesondere bevorzugt von mindestens 500 ml. Alternativ oder in Kombination damit weist die Reaktionszone vorzugsweise ein Volumen von maximal 5 l, vorzugsweise von maximal 3 l, insbesondere bevorzugt von maximal 2 l, auf. Beispielsweise kann das Volumen der Reaktionszone 25 ml bis 2 l betragen. Als Volumen der Reaktionszone wird das Volumen der Zone des Hohlkörpers betrachtet, in welchem die Bedingungen zur Polymerisation vorherrschen oder reinstellbar sind, z.b. vom Einlass bis zum Auslass. Beim Einlass werden üblicherweise die Edukte zusammengeführt. Beim Auslass werden Prepolymer und ggf. unreagierte Edukte aus dem Reaktor ausgeführt.

Durch Volumen und Durchsatz (oder Flussrate) kann die Verweilzeit im Reaktor bestimmt oder eingestellt werden. Vorzugsweise ist die Verweilzeit der zu Präpolymer polymerisierenden und polymerisierten Edukte in der Reaktionszone mindestens 2 min, vorzugsweise mindestens 3 min oder mindestens 4 min, z.B. 2 min bis 15 min, vorzugsweise 3 min bis 12 min, insbesondere bevorzugt 4 min bis 10 min. In diesen Zeiten lässt sich eine gute Polymerisation zu Prepolymer einstellen, z.B. durch Wahl einer geeigneten Temperatur, von Eduktkonzentrationen und optional eines Katalysators. Vorzugsweise wird erfindungsgemäß kein Katalysator zu Eduktfluiden zugesetzt. Ebenso bevorzugt wird auch an der Hohlkörperwand kein spezifischer Katalysator eingesetzt. Ein spezifischer Katalysator ist speziell zur Polymerisation hergerichtet. Erfindungsgemäß ist der Hohlkörper ein Metallkörper, welcher nicht spezifisch eine Polymerisation beschleunigen soll. Dennoch kann es gegebenenfalls vorkommen, dass an seiner Oberfläche Polymerisation stattfindet.

Vorzugsweise werden die Edukte in einer Lösung in die Reaktionszone eingebracht. Die Konzentration der Edukte ist vorzugsweise zusammen 20% bis 60% (Masse-%). "Zusammen" bedeutet, dass die Konzentration der einzelnen Edukte addiert wird. Die Eduktkonzentration entspricht dann nach Polymerisation auch der Konzentration des Prepolymers (in Masse-%), im Fall einer vollständigen Polymerisation. Bei unvollständiger Poylmerisation liegt nach dem Auslass das Prepolymer in geringerer Konzentration vor, als die Edukte zusammen am Einlass. Mit den angegebenen Masse-% lässt sich die Polymerisation gut im erfindungsgemäßen Reaktor einstellen. Diese Konzentration passt ebenfalls gut mit den oben genannten Verweilzeiten zusammen. In besonders bevorzugten Ausführungsformen ist die Konzentration der Edukte zusammen 24% bis 56%, speziell bevorzugt 30% bis 50% (alle Masse-%).

Vorzugsweise wird eines der Edukte gegenüber einem anderen der Edukte in einem Überschuss in die Reaktionszone eingebracht. Insbesondere bevorzugt wird es mit einem Überschuss von mindestens 5 % (Mol-%), besonders bevorzugt von mindestens 10% (Mol-%) oder sogar von mindestens 20% (Mol-%), eingebracht. Vorzugsweise ist der Überschuss eines Edukts gegenüber einem anderen Edukt (mit anderen Funktionalitäten z.B. NCO mit dem überschießenden Edukt mit OH-Funktionalitäten) zwischen 2-30%, bevorzugt zwischen 5-22% (Mol-%). Ein Molüberschuss kann zu einer gezielten Molmassenverteilung und insbesondere einer maximalen Molmasse im produzierten Prepolymer führen. Dies ist oft gewünscht, damit das Prepolymer löslich bleibt. Bei einer Herstellung von Polyurethan-Prepolymer ist vorzugsweise das Edukt mit einer oder mehr (insb. zwei) Alkoholgruppen im Überschuss.

Vorzugsweise beträgt die Temperatur in der Reaktionszone 20°C bis 80°C, vorzugsweise 30°C bis 70°C oder 35°C bis 60°C, speziell bevorzugt 40°C bis 55°C, oder beliebige Bereiche zwischen diesen Werten. Der Rektor kann ein Heizmittel zum Beheizen des Hohlkörpers aufweisen. Mit diesen Temperaturen lässt sich die Polymerisation gut steuern, ohne zu rasche Polymerisationen zu hohen Molmassen zu führen oder mit nur geringen oder keinen ungewollten Nebenreaktionen.

Bei der Herstellung eines Prepolymers, vorzugsweise eines Polyurethan-Prepolymers, wird vorzugsweise der Reaktor mit einer Temperatur (T), einer Verweilzeit (t), und einem optionalen molaren Überschuss eines Edukts (c) betrieben, sodass ein angepeiltes mittleres Molekulargewicht des Prepolymers von 5000 Da bis 80000 Da gemäß der Formel

$$M_k(T, t, c) = A_T * e^{K_T * T} + A_t * t - A_c * c$$

wobei $M_k(T,t,c)$ ist das angepeilte mittlere Molekulargewicht des Prepolymers, A(T) ist 0,00039 Da, K(T) ist 0,05733 $K^{-1}$, A(t) ist 1354 Da $min^{-1}$, A(c) ist 534 Da $mol^{-1}$, T ist die Temperatur in K, t ist die Verweilzeit in min, c ist der molare Überschuss eines Edukts in mol%, erhalten wird. Temperatur (T), Verweilzeit (t), und molarer Überschuss können einfach eingestellt und aufeinander abgestimmt werden, um obige Formel zu erfüllen. Temperatur (T), Verweilzeit (t), und molarer Überschuss können beispielsweise innerhalb der oben genannten Bereiche liegen. Damit lässt sich die Molmasse des Produkts gut vorhersagen (mit Unschärfeabweichungen) und gut einstellen.

Alle oben genannten Parameter und bauliche Eigenheiten des Reaktors werden vorzugsweise bei der Polyurethan-Prepolymer-Herstellung verwendet.

Die Edukte für die Polyurethan-Herstellung sind hauptsächlich (Poly)isocyanate und (poly)Alkohole (z.B. Polyester-, Polyether-, Polycarbonat Polyole). Die Isocyanate können ein oder mehrfache Isocyanat (NCO)-Funktionalität besitzen. (poly)Alkohole haben eine oder mehrere Alkohol (OH, Hydroxy) Gruppen. Der Wasserstoff der Alkohol Gruppe, der für eine Polymerisation mit der Isocyanatgruppe geeignet ist, kann ein Zerewitinoff-aktiver Wasserstoff sein.

Darüber hinaus können die Edukte, z.B. das Isocyanat oder der Alkohol, spezielle Molekülbausteine wie etwa Ethanolamine, Carbonsäuren, Alkene, Organosulfone oder Chlorsulfone aufweisen. Häufig werden auch bereits Polymere daraus mit niedrigem Polymerisationsgrad, sodass die Polymere löslich sind und vorzugsweise in Lösung eine niedrige Viskosität haben, eingesetzt. Beispielsweise können Polymere Edukte bei einer Konzentration (Masse-%) in DMAc als Lösungsmittel eine Brookfield-Viskosität von nicht mehr als 200 mPas, vorzugsweise von 1 mPas bis 150 mPas, bei 25 °C haben. Derartige Polymere Edukte können auch in anderen Konzentrationen oder anderen Lösungsmitteln eingesetzt werden.

Im erfindungsgemäßen Reaktor können optional Katalysatoren zur Polymerisation eingesetzt werden. Katalysatoren sind beispielsweise organische Lewis Basen, Lewis Säuren, Phosphate oder (organische) Metall Salzen/Oxide. Derartige Katalysatoren oder Katalysatoren im Allgemeinen können auch vermieden werden.

Als Edukte werden NCO-funktionalisierte Edukte mit OH-funktionalisierten Edukten verbunden. Die Edukte können ein oder mehrfach NCO- bzw. OH-funktionalisiert sein. Typische aber nicht darauf beschränkte Beispiele sind NCO terminierte Edukte, wie z.B. Methylendiphenylisocyanate (MDI), Hexamethylendiisocyanat (HDI), Toluol-2,4-diisocyanat (TDI), p-Toluolsulfonylisocyanat (TSI) und ihre Isomere. Typische aber nicht darauf beschränkte Beispiele sind OH-terminierte Edukte, wie z.B. Methyldiethanolamin (MDEA), Diethanolamin (DEA), tert-Butyldiethanolamine (TBDEA), Glycole, z.B. Ethylenglykol, Alkylalkohol (z.B. $C_{2-10}$ Alkohol, z.B. EtOH) und Polyole.

Vorzugsweise ist das (oder ein) Isocyanat-Edukt ein organisches Diisocyanat. Als organische Diisocyanate kommen beispielsweise aliphatische, cycloaliphatische, heterocyclische und aromatische Diisocyanate in Betracht. Aliphatische Diisocyanate sind beispielsweise verzweigtes oder unverzweigtes $C_2$-$C_{18}$-Alkyldiisocyanat, wie Hexamethy-

lendiisocyanat. Cycloaliphatische Diisocyanate sind beispielsweise Isophorondiisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische. Aromatische Diisocyanate sind beispielsweise 4,4-MethylenBis(Phenylisocyanat), 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmethandiisocyanat, urethan-modifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat. Bevorzugt ist 4,4-MethylenBis(Phenylisocyanat) ("MDI").

Vorzugsweise ist das (oder ein) Alkohol-Edukt ein organisches Diol. Bevorzugte Diole sind Methyldiethanolamin ("MDEA") und tert-Butyldiethanolamin ("TBDEA").

Die Herstellung eines Polyurethan Prepolymer erfolgt vorzugsweise in einem isotherm geführten Reaktor. Der längliche Hohlkörper ist in allen Ausführungsformen der Erfindung und auch in dieser zur Polyurethan-Prepolymer Synthese vorzugsweise ein Rohr. Der Synthese Ablauf kann wie folgt erfolgen.

Die Edukte werden in geeigneten Behältern vorgelegt. Je nach Aggregatszustand und Produktqualität kommen bei den Edukten Lösungsmittel zum Einsatz. Bevorzugt werden nur flüssige Komponenten zum Einsatz kommen bzw. werden die Edukte in flüssiger Form in den Reaktor eingebracht. Bei Bedarf können die Edukte auch vortemperiert werden. Die Temperierung der Edukte erfolgt vorzugsweise zwischen 0-80°C oder 10-70 °C, bevorzugt 20-60 °C, oder Kombinationen dieser Bereiche.

Die Lagerung und/oder Behandlung vor der Reaktionszone der Edukte erfolgt vorzugsweise unter inerten Bedingungen, welche vorzugsweise (u.a.) wasserfreie Bedingungen sind. Für inerte Bedingungen werden die Lagergehälter für die Edukte mit Inertgas gespült und die Edukte mit Inertgas überlagert. Zusätzlich erfolgt die Lagerung mit oder ohne Stabilisator. Als Stabilisator kann etwa Toluol-2,4-diisocyanat (TSI) oder ähnliche Komponenten eingesetzt werden.

Eines oder mehrere der Edukte wird vorzugsweise gelöst verwendet. Insbesondere bevorzugt wird das Isocyanat und/oder der Alkohol gelöst verwendet.

Als Lösungsmittel können bekannte aprotisch polare Substanzen, beispielsweise DMAc, Tetrahydrofuran (THF), Dimethylsulfoxid (DMSO), oder Dimethylformamid (DMF), verwendet werden.

Mit Pumpen, z.B. Membran-, Kolben- oder Zahnradpumpen, können zwei oder mehr Edukte transportiert und im Reaktor zusammengeführt werden. Die Entscheidung welche Pumpen eingesetzt werden ist letztlich rein eine Frage des Skalierungsfaktors bzw. der Viskosität des jeweiligen Edukts. Bei der Zusammenführung kommen vorzugsweise keine Mischelemente zum Einsatz. Edukte werden vorzugsweise lediglich über eine Abzweigung zugeführt.

In vorzugsweisen Ausführungsformen ist das Strömungsprofil im Hohlkörper, insbesondere in der Reaktionszone, laminar. Eine laminare Strömung kann durch Wahl der Strömungsgeschwindigkeit, Viskosität (wiederum abhängig von Lösungsmittel, Edukt-Konzentration und Temperatur) eingestellt werden.

Der Aufbau des länglichen Hohlkörpers besteht vorzugsweise aus einem oder mehreren Rohrelementen, welche aneinander gereiht werden. Die Rohrelemente können einen Innendurchmesser von 0,5 mm bis 20 mm, bevorzugt 1 mm bis 12 mm aufweisen. Wie oben bereits beschrieben, werden in den Teilbereichen unterschiedliche Innendurchmesser eingesetzt. Ziel ist es den Durchmesser mit Fortschreiten der Reaktion zu erhöhen, um den Effekt der Wärmetönung zu verringern und gleichzeitig ein Minimum an Druckverlust zu erzeugen. Mit Voranschreiten der Reaktion und dem Erhöhen der Prepolymer-Produktkonzentration, erhöht sich die Viskosität. Diese Viskosität kann durch die erfindungsgemäße Staffelung des Innendurchmessers kompensiert werden. Die Länge eines Teilbereichs, z.B eines Rohrelements, ist vorzugsweise 0,1 m bis 7 m, bevorzugt 0,3 m bis 5,8 m, z.B. 0,8 m bis 3 m. Die länglichen Hohlkörper können eine Querschnittslänge von 0,1 m bis 7 m, vorzugsweise 0,3 m bis 5,8 m haben.

Der längliche Hohlkörper, insbesondere Rohre, kann eine oder mehrere Biegungen, insbesondre J-Typ-Form, haben. Der Hohlkörper ist weitgehend geradlinig (z.B. in > 70 %, vorzugsweise < 80%, seiner Länge), kann aber zur Unterbringung der Gesamtlänge in kompakter Form, z.B. auf oder in Platten, Biegungen aufweisen. In Summe kann die resultierende Form des gesamten Hohlkörpers, z.B. bei mehreren J-Typ-gebogenen Rohren, eine Mäanderform sein. Vorzugsweise werden keine Mischer im länglichen Hohlkörper oder in der Reaktionszone eingesetzt. Mischer können beispielsweise Ablenkbleche bei ansonsten geradlinigem Hohlkörper sein. Eine laminare Strömung in der Reaktionszone wird vorzugsweise eingestellt (bei entsprechenden baulichen Maßnahmen ohne Mischer die Turbulenzen verursachen können, und /oder bei entsprechender Fließgeschwindikeit bei gegebener Viskosität).

Vorzugsweise hat der erste und zweite Teilbereich unabhängig voneinander jeweils eine Länge von ≥ 1 m, und der zweite Teilbereich eine Länge, die größer-gleich der Länge des ersten Teilbereichs ist, wie oben bereits ausgeführt wurde. Die Länge des länglichen Hohlkörpers oder der Reaktionszone kann bis zu 120 oder mehr, z.B. bis zu 240 m oder mehr, aufweisen. Vorzugsweise hat der Hohlkörper bzw. die Reaktionszone eine Länge von mindestens 2 m, mindestens 3 m, mindestens 5 m, mindestens 8 m, mindestens 10 m, mindestens 15 m, besonders bevorzugt (insb. für industrielle Anwendungen) mindestens 20 m, oder sogar mindestens 25 m.

Beispiele für die erfindungsgemäße Staffelung in Hohlkörper oder Reaktionszonen sind mit den folgenden Maßen. Diese sind Beispiele für die vorliegende Erfindung und weitere Alternativen sind innerhalb des erfindungsgemäßen Gesamtkonzepts möglich.

1. erster Teilbereich: Innendurchmesser 1,5 mm bis 2,15 mm, Länge 1 m bis 50 m; zweiter Teilbereich: Innendurchmesser 2,3 mm bis 6 mm, Länge 1 m bis 50 m.
2. erster Teilbereich: Innendurchmesser 1,5 mm bis 2,15 mm, Länge 1 m bis 50 m; mittlerer Teilbereich: Innendurchmesser 2,2 mm bis 2,8 mm, Länge 1 m bis 50 m; zweiter Teilbereich: Innendurchmesser 2,9 mm bis 7 mm, Länge 1 m bis 50 m.
3. erster Teilbereich: Innendurchmesser 1,5 mm bis 2,0 mm, Länge 1 m bis 50 m; zweiter Teilbereich: Innendurchmesser 2,1 mm bis 11 mm, Länge 1 m bis 50 m.
4. erster Teilbereich: Innendurchmesser 1,5 mm bis 2,0 mm, Länge 1 m bis 50 m; mittlerer Teilbereich: Innendurchmesser 1,8 mm bis 2,8 mm, Länge 1 m bis 50 m; zweiter Teilbereich: Innendurchmesser 2,9 mm bis 11 mm, Länge 1 m bis 50 m.
5. erster Teilbereich: Innendurchmesser 1,5 mm bis 2,19 mm, Länge 1 m bis 50 m; erster mittlerer Teilbereich: Innendurchmesser 2,2 mm bis 2,5 mm, Länge 1 m bis 50 m; zweiter mittlerer Teilbereich: Innendurchmesser 2,51 mm bis 3,5 mm, Länge 1 m bis 50 m; zweiter Teilbereich: Innendurchmesser 3,6 mm bis 14 mm, Länge 1 m bis 50 m.

Bevorzugte Beispiele für derartige Staffelungen sind in den Beispielen in den Rektor-Setups 4-6 gegeben, welche auch für andere Anwendungen, als die in den Beispielen gezeigten, verwendbar sind.

Als Materialien für den Hohlkörper oder den Reaktor im Allgemeinerem werden Kunststoffe (z.B. Polytetrafluorethylen - PTFE, Polypropylen - PP, Polyethylen - PE, Polyvinylchlorid - PVC, Polyvinylidenfluorid - PVDF, Polychlortrifluorethylen - PCTFE, Ethylenechlorotrifluoroethylen - ECTFE, Perfluoralkoxylalkan - PFA, Perfluorethylenpropylen - FEP, Polyoxymethylene - POM, oder ähnliche), Metalle, wie Edelstähle (1.4301, 1.4404, 1.4571, 1.4539, 1.4547 oder ähnliche) oder Nickel Basislegierungen (2.4602, 2.4819, 2.4858 oder ähnliche) und vergleichbare, eingesetzt.

Die Rohrdimensionen werden vorzugsweise so gewählt, dass ein Oberflächen-zu-Volumen-Verhältnis von 350 $m^2/m^3$ bis 6 000 $m^2/m^3$, bevorzugt 1000 $m^2/m^3$ bis 3000 $m^2/m^3$ erreicht wird. Dies betrifft den länglichen Hohlkörper im Gesamten, vorzugsweise auch jeden Teilbereich für sich.

Des Weiteren liegt die reaktorspezifische Oberflächenbelastung im Bereich von 2 l/hm$^2$ bis 140 l/hm$^2$, bevorzugt von 4 l/hm$^2$ bis 40 l/hm$^2$. Die reaktorspezifische Oberflächenbelastung ist eine Größe für den Durchsatz (Fließgeschwindigkeit in l/h) pro Oberfläche im länglichen Hohlkörper bzw. in der Reaktionszone.

Vorzugsweise liegt die reaktorspezifische Volumenbelastung im Bereich von 300 l/hm$^3$ bis 23 000 l/hm$^3$, bevorzugt von 700 l/hm$^3$ bis 5000 l/hm$^3$. Die reaktorspezifische Oberflächenbelastung ist eine Größe für den Durchsatz (Fließgeschwindigkeit in l/h) pro Volumen im länglichen Hohlkörper bzw. in der Reaktionszone.

Vorzugsweise ist im Verfahren die hydrodynamische Verweilzeit zwischen 0,5 und 20 Minuten, bevorzugt zwischen 2 und 15 Minuten. Die Verweilzeit kann durch Durchsatz (Fließgeschwindigkeit) bei gegebenem Reaktor eingestellt werden. Sie gibt die durchschnittliche Aufenthaltsdauer der Edukte und der daraus polymerisierten Produkte zusammen in der Reaktionszone an.

Wenn ein größerer Umsatz gewünscht wird, wird der Innendurchmesser im länglichen Hohlkörper, und ggf. die Länge der Hohlkörper bzw. seiner Teilbereiche, erhöht. Somit kann mit steigendem Umsatz eine Anpassung des Rohrdurchmessers stattfinden. Je nach Reaktionsenthalpie und einer geeigneten Kombination aus Durchmesser und Länge eines Teilbereichs bzw. Rohrelements kann ein definierter Anteil der Reaktionswärme kompensiert werden. Ideale Reaktionsbedingungen ergeben sich aus einer Kombination aus maximalem Umsatz bei minimalem Druckverlust, Verweilzeit und Temperierung.

Der längliche Hohlkörper wird in einem Heizmittel oder einem Wärmetauscher untergebracht. Der Wärmetauscher kann aus einzelnen Platten bestehen, in denen der Hohlkörper untergebracht wird, eingebettet oder umgeben vom Wärmetauscher. Die Platten können einzeln oder in einer Anzahl von 2-50 gestapelt vorgesehen werden. Je nach Ausbau können auch mehrere Stapel miteinander verbunden werden. Vorzugsweise werden die Hohlkörper in Platten eingebracht, eingebettet, z.B. in nutförmigen Vertiefungen in Platten eingebettet, oder aufgelegt, vorzugsweise in 1-30 Platten. Ein derartiger Aufbau ist in WO 2010/055034 A1 (durch Bezugnahme hierin aufgenommen) beschrieben.

Die Platten und Rohre können aus verschiedensten Materialien bestehen, wie Kunststoffe (Polytetrafluorethylen - PTFE, Polypropylen - PP, Polyethylen - PE, Polyvinylchlorid - PVC, Polyvinylidenfluorid - PVDF, Polychlortrifluorethylen - PCTFE, Ethylenechlorotrifluoroethylen - ECTFE, Perfluoralkoxylalkan - PFA, Perfluorethylenpropylen - FEP, Polyoxymethylene - POM, oder ähnliche), Metallen wie Edelstähle (1.4301, 1.4404, 1.4571, 1.4539, 1.4547 oder ähnliche), Nickel Basislegierungen (2.4602, 2.4819, 2.4858 oder ähnliche), und vergleichbaren. Bevorzugt bestehen die Platten aus faserverstärken, insb. glasfaserverstärkten) Kunststoff, Aluminium der Edelstahl. In diesen Platten werden die Rohre in Kanälen vom Heizmedium umspült.

Je nach Ausgestaltung können ein oder mehrere Platten in individuelle Temperaturzonen unterteilt werden. Jede Temperaturzone wird mit einer vorgeschalteten Temperierung auf der gewünschten Temperatur gehalten.

Die Reaktionstemperatur kann 10-80 °C, bevorzugt 20-60 °C betragen, vorzugsweise mindestens 25°C, insbesondere bevorzugt mindestens 40 °C.

Der Reaktor bzw. die Reaktionsparameter sind so aufgebaut, dass sie individuell an die konkrete Prepolymer-Synthese angepasst werden können. Dazu werden Rohrelemente (Teilbereiche die zusammen die Reaktionszone ausmachen) unterschiedlich verbunden, die Temperatur (Zonen) adaptiert und die Verweilzeit (Durchsatz) variiert.

Die oben beschriebenen Prozessbedingungen werden vorzugsweise so gewählt, dass am Ende der Reaktionszone (beim Auslass) ein Umsatz bezogen auf das NCO Edukt von 80-100%, bevorzugt 95-100% erreicht wird (alle Masse-%). Dazu werden die Reaktionsdimensionen (insb. Länge), Temperatur und Konzentrationen, insb. ein Überschuss von Alkohol-Edukt, eingestellt.

Nach dem Auslass kann das Produkt in einem Sammelbehälter aufgefangen oder gesammelt werden. Im Sammelbehälter sind üblicherweise keine Polymerisationsbedingungen vorhanden, z.B. eine niedrigere Temperatur, wie Raumtemperatur (z.B. 22°C). Ebenso ist es möglich eine etwaige Polymerisation durch Quenchen zu unterbinden. Dazu kann ein einwertiges Edukt, vorzugsweise ein einwertiger Alkohol, im Sammelbehälter vorhanden sein.

Eine Besonderheit des erfindungsgemäßen Reaktors besteht außerdem darin, dass die Reaktoreinheit genau auf jedes Reaktionsprodukt (Reaktionsenthalpie, Molmasse, etc.) abgestimmt werden kann.

Vorzugsweise wird die Produktqualität online, z.B. mit Infrarotspektroskopie, Brechungsindex, Viskosität, Dichte, Titration und/oder Licht-(Laser-)Beugung -Messung, überwacht. Der Umsatz sowie die Produktqualität können direkt nach Verlassen des Reaktors (am Auslass) und/oder am Produkt im Sammelbehälter bestimmt werden. Dazu kann das Produkt Inline/Online mittels Infrarot (IR)-, Viskosität-, Dichte, Ultraviolet und des sichtbaren Licht (UV-Vis)-, Brechungsindex- sowie Titrationsanalyse untersucht werden. Die Online Ergebnisse, etwa der IR Messung, können direkt eingesetzt werden um die Prozessbedingungen, wie Edukt Mengenströme, anzupassen. Insbesondere kann der NCO-Umsatz infrarotspektroskopisch verfolgt werden.

Vorzugsweise wird (wie auch die Eduktbehälter) der Produktbehälter mit Inertgas gespült/überlagert sowie ist er wasserfrei um eine Änderung der Produktgüten zu unterbinden. Vorzugsweise wird das Produkt zwischen -20 °C bis 50 °C temperiert während der Lagerung bzw. im Sammelbehälter.

Erfindungsgemäß kann eine Nachbehandlung am Produkt-Prepolymer vorgenommen werden, diese erfolgt nach der Reaktionszone. Sie kann in einem Sammelbehälter für Produktprepolymer oder auch noch im Reaktor in einem Hohlkörper, z.B. bei anderer Temperatur oder ohne Katalysator, sofern dieser zur Polymerisation nötig ist, erfolgen. Die Nachbehandlung kann eine Temperatureinstellung, eine Inertisierung, eine Endgruppenmodifizierung oder eine Kombination davon sein. Endgruppenmodifizierungen sind z.B. Erhalten von aliphatisch terminiertem Polymer, z.B. durch Reaktion mit einem einwertigen Alkohol; Erhalten von Hydroxy-terminiertem Polymer, z.B. durch Reaktion mit mehrwertigem Alkohol; Erhalten von Amin-Endgruppen, z.B. durch Reagieren mit Wasser; Erhalten von Amid-Endgruppen, z.B. durch Reagieren mit einer Carbonsäure; oder Kombinationen davon.

Durch die Verwendung des erfindungsgemäßen Reaktors und der Reaktionsparameter können Nebenreaktionen vermieden werden und eine höhere Wiederverwendbarkeit des Reaktors erfolgen. Nebenreaktionsprodukte können vor allem eine eventuell unerwünschte Biuret, Allophanat bzw. hochgradige Urea-Bildung sein, welche negative Eigenschaften auf erwünschtes Prepolymer, v.a. im Fall von Polyurethan-Prepolymer, mit sich bringen. Dies kann zu einer zu hohen Molmasse sowie Vernetzung führen. Dies resultiert in schwer löslicher Gel-Bildung mit sehr hoher Viskosität. Gel kann den Reaktor unbrauchbar machen.

Je nach Anforderung erfolgt in einer Reaktionszone oder im Sammelbehälter noch eine Nachbehandlung. Durch Hinzufügen von Additiven kann die Produktqualität fixiert werden. Je nach Umsatzgrad können noch reaktive Endgruppen vorhanden sein. Um die gewünschte Endgruppen-Reaktivität einzustellen dienen Additive. Vorrangig kann dabei nach NCO, Amin, Amide, Hydroxy und aliphatisch terminiert unterschieden werden.

Um NCO terminierte Polymere zu erreichen wird der Umsatzgrad entsprechend gesteuert und die Lagerung/Abfüllung erfolgt inert und wasserfrei.

Amin terminierte Polymere werden durch Zugabe von genau kontrollierten Mengen an Wasser und schnellen Umsatz in der Reaktionszone oder im Sammelbehälter erreicht.

Amid terminierte Polymere werden durch Zugabe von genau kontrollierten Mengen an Carbonsäuren in der Reaktionszone oder im schnellen Umsatz im Sammelbehälter erreicht.

Hydroxy terminierte Polymere werden durch Zugabe von mehrwertigen Polyolen in der Reaktionszone oder im Sammelbehälter erreicht.

Aliphatisch terminierte Polymere werden durch Zugabe von einwertigen Alkoholen in der Reaktionszone oder im Sammelbehälter erreicht.

Wesentlich ist auch die Reinigung des Reaktors. Die Polymerisation der reaktiven Komponenten findet im gesamten Prozessstrom in der Reaktionszone statt. Dabei begrenzt sich die Polymerisation nicht nur in Kombination verschiedener Edukte. Die Edukte können aufgrund ihrer hohen Aktivität auch mit sich selbst reagieren bzw. polymerisieren. Hinzu kommt die laminare Strömung über den gesamten Prozess. Dadurch sind im Strom bis zum Auslass oder Sammelbehälter immer reaktive Komponenten zu finden. Dies kann zu oben erwähnten Nebenreaktionen (Polyurea-, Allophan-, Biuret-, Gelbildung und Vernetzung) führen. Dadurch wird die Produktion gestört und im schlechtesten Fall der Reaktor irreversibel verblockt. Daher ist eine regelmäßige Spülung und ein definiertes An-/Abfahr Prozedere vorteilhaft um den Prozess kontinuierlich betreiben zu können. Das Spülprozedere kann je nach Prozessschritt unterschiedlich ausfallen.

Je nach Produktanforderungen kann die Spülung mit der Nachbehandlung (Fixierschritt) kombiniert werden. Es entstehen keine minderwertigen Produkte. Eine Nachbehandlung kann gegen Ende der Reaktionszone, nach der Reaktionszone im Reaktor oder im Sammelbehälter erfolgen. Das Fixiermittel kann ein ein- oder mehrwertiger Alkohol sein.

Bei Produktumstellung bzw. bis mittleren Stillstand (< 7 Tage), wird vorzugsweise zuerst mit mindestens 4 Reaktorvolumen mit einem Lösungsmittel gespült. Geeignete Lösungsmittel wurden oben beschrieben, bevorzugt DMAc. Danach folgt eine Spülung von 4-10 Reaktorvolumen aus einer Lösemittel/Fixiermittel-Mischung, vorzugsweise 2:1 bis 1:1-Mischung. Die genaue Menge an Volumen wird mittels Online Messung (IR) bestimmt. Die Spülung ist abgeschlossen, wenn mindestens 2 Reaktorvolumina kein Edukt oder Prepolymer, insb. kein NCO Edukt, mehr detektiert wird. Falls ein Stillstand ansteht, werden die Ein-/Ausgänge aller Leitungen Luftdicht verschlossen.

Bei Stillstandszeiten ab 7 Tagen oder wenn Anlagenteile zerlegt werden ist ein umfangreicheres Prozedere empfohlen. Vorzugsweise werden die Spülschritte wie beim mittleren Stillstand durchgeführt. Danach folgt ein Spülen von 4-8 Reaktorvolumina mit wasserfreien Fixiermittel. Dafür eignen sich insbesondere aber nicht darauf beschränkt Glykole, Alkohole. Die dabei ausfallenden unlöslichen Komponenten (Oligomere, unlöslich umfunktionalisierten Monomere) werden mit einer weiteren Lösemittel Spülung von etwa 4 Reaktorvolumina entfernt. Bei längeren Stillstandszeiten > 30 Tage, oder Demontage erfolgt noch eine Spülungssequenz mit von je etwa 4 Reaktorvolumina mit 96% Ethanol, Ethanol/Wasser 50% und Wasser.

In der Laboranalytik können die makromolekularen Eigenschaften des Prepolymers und die Reinheit untersucht werden. Diese ergeben sich aus den Edukten, deren Verhältnis und der Polymer Kettenlänge. Die Kettenlänge wird mit Größenausschluss-Chromatographie (SEC) bestimmt (z.B. mit THF oder DMSO, 35 °C, Butylhydroxytoluol (BHT) Flowmarker 30,6 ml ret. Vol., RI Detektor, Polystyrol (PS) Standards, PSS SDV Säule, 0,8 ml/min). Vorzugsweise liegt die mittlere Molmasse (Mw) des Prepolymers im Bereich von 4 000 Da bis 80 000 Da, bevorzugt 7 000 Da bis 50 000 Da, besonders bevorzugt 8 000 Da bis 25 000 Da. Die Polydispersität Mw/Mn ist vorzugsweise kleiner 4, bevorzugt kleiner 2. Die oben genannten Parameter können eingestellt werden um diese Bereiche zu erreichen.

Die Kettenlänge des Prepolymers nimmt direkt Einfluss auf die Viskosität des Produkts. Daher kann die Produktqualität auch über die Viskosität bestimmt werden. Dazu kann ein Rheometer verwendet werden (Anton Paar MCR102, CC27 Messinstrument, in Zylinder, 25 °C). Der bevorzugte Viskositätsbereich liegt zwischen 20 mPa*s bis 30 000 mPa*s, bevorzugt zwischen 90 mPa*s bis 7 000 mPa*s, besonders bevorzugt 120 mPa*s bis 5 000 mPa*s, bei 25 °C.

Das erfindungsgemäße Verfahren, insbesondere zur Herstellung eines Polyurethan-Prepolymers, wird vorzugsweise so betrieben, sodass bei einer gegebenen Zielmolmasse M [Da] und einer gegebenen Prepolymer Konzentration im Produkt [m%], eine angepeilte Viskosität von 20 mPa*s bis 30 000 mPa*s, oder eines anderen Viskositätsbereichs wie oben angegeben, gemäß der Formel

$$\eta(M,c) = A_M * e^{K_M * M} * A_{PUR} * e^{K_{PUR} * c_{PUR}} * A_\eta$$

wobei $\mu(M,c)$ die angepeilte Viskosität, M die Zielmolmasse [Da], c(PUR) die Prepolymer-Konzentration im Produkt[m%], A(PUR) 0,8319 mPa s, K(PUR) 0,1561 m%$^{-1}$, A(M) 73 mPa s, K(M) 0,0000829 Da$^{-1}$, A($\eta$) 0,00502 sind, erhalten wird. Die Zielmolmasse M [Da] und die angepeilte Prepolymer Konzentration sind wie oben angegeben, z.B. eine Zielmolmasse Mw von 4 000 Da bis 80 000 Da bzw. 20%-60% (Masse-%) oder die oben angegebenen vorzugsweisen Werte. Vorzugsweise ist der gravimetrisch bestimmte Polymergehalt im Produkt (Vakuum Trockenschrank Binder VDL 23, bei 180 °C, 3h) 10-60, bevorzugt 30-50% (Masse-%).

Die spezifische Dichte des Polymer-Produkts gemessen mit dem Aräometer (Carl-Roth, Messbereiche 0.75-1 und 1-1.1) liegt vorzugsweise bei 0,8-1,2, bevorzugt bei 0,9-1,1.

Der gravimetrisch bestimmte Polymergehalt im Produkt (Vakuum Trockenschrank Binder VDL 23, bei 180 °C, 3h) liegt vorzugsweise bei 10%-60%, bevorzugt bei 30%-50% (alle Masse-%).

Der Wassergehalt im Prepolymer (Karl Fischer, Metrohm 907 Titrando) liegt vorzugsweise unter <4000 ppm, bevorzugt < 2500 ppm (Masse-ppm).

Der Metall Gehalt im Speziellen der Eisen und Kupfer (Optische Emissionsspektrometrie mit induktiv gekoppeltem Plasma - ICP-OES, Thermo Scientific iCAP 7400, in H$_2$SO$_4$) Summenparameter ist vorzugsweise < 10, bevorzugt ppm < 4 ppm.

Die Produktfarbe (Gelbfärbung) ist eine Größe um auf die Qualität und das Alter des Prepolymer-Produktes schließen zu können. Optisch ist die Farbe vorzugsweise von farblos bis leicht gelblich. Die HAZEN Farbzahl (nach Pt/Co Skala und/oder gemäß DIN ISO 6271) (UV-Vis, Thermo Scientific Evolution 350) des Produkts ist vorzugsweise < 100, bevorzugt < 50.

Je nach Anforderung ist der Rest NCO-Gehalt bedeutsam (nach DIN EN ISO 14896, Metrohm 907 Titrando). Wenn keine NCO Terminierung gewünscht ist, soll der Rest-NCO Gehalt < 0,1%, bevorzugt <0,05%, sein (alle Masse-%).

Das erfindungsgemäße Verfahren ist frei skalierbar, vorzugsweise wird Prepolymer mit einem Umsatz von 0,13 kg/h bis 1536,8 kg/h oder einem Vielfachen davon hergestellt.

Polyurethan Prepolymere finden eine breite Anwendung wie in Baustoffen, Verpackung, Automotive, Elektrik, Isolierungen, Haushalt, Bekleidung, chemische Zusatzstoffe und vieles mehr. Die erfindungsgemäßen Prepolymere können in diesen Bereichen verwendet werden. Beispielsweise Anwendungsfälle sind der Einsatz für einfachere und intensivere Färbung von Fasern und Endprodukten. Prepolymere können als Farbstabilisator zur Verlängerung der Farbstabilität von Produkten, z.B. in diesen Anwendungsbereichen, verwendet werden.

Das erfindungsgemäße Prepolymer kann als Spinnzusatz in der (Kunst)faserproduktion verwendet werden. Dadurch wird die Faserproduktion verfahrenstechnisch und die Stabilität der Fasern verbessert. Generell erhöht der Zusatz der Prepolymere die Widerstandsfähigkeit von Kunststoffen oder Fasern gegenüber Abbaumechanismen via UV, Licht, Oxidation und Wärme. Das Prepolymer kann als Farbstabilisator für Polyurethan (PU) Polymer (stärker polymerisiertes PU, z.B. nicht mehr in den obigen Lösungsmittel, wie DMAc, lösliches PU). Insbesondere kann das Prepolymer zur Verbesserung des PU-Faserspinnens verwendet werden. Generell kann Prepolymer als PU-Stabilisator verwendet werden.

Die Prepolymere können auch als Ausgangsstoff für weitere Polymerisationen verwendet werden, z.B. als Kettenverlängerer. Dabei werden die Prepolymere mit anderen Monomeren und Kettenverlängerern (wie etwa Polyalkohole, Polyglycole (EtGlycol), Polyacrylate, Polyether, Polyester und ähnlichen) verbunden. Verlängert werden können beliebige Polymere, wie PU, Polyharnstoff oder andere funktionalisierte Polymere. Dies kann auch in Kombination mit anderen Kettenverlängerern, wie Polyalkoholen, Polyglykolen, Polyacrylaten, Polyethern oder Polyestern, erfolgen.

Die vorliegende Erfindung wird weiters durch die nachstehenden besonderen Ausführungen der Beispiele erläutert.

**Beispiele**

**Beispiel 1:** Vorbereitung der Edukt-Lösungen und Temperierung

Vorbereitung der Isocyanat-Lösung (Edukt 1): Edukt 1 wird hergestellt indem 4,4-MethylenBis(Phenylisocyanat) (MDI) (Sigma-Aldrich, 98%) mit N,N-Dimethylacetamid (DMAc) (Sigma-Adlrich, ≥99.8%) gemischt wird. Der MDI Gehalt liegt je nach angepeiltem Polyurethan-Gehalt im Produkt (siehe **Tabelle 1** Spalte [B]) bei 10-70%. Je nach Vorbehandlung (siehe **Tabelle 1** Spalte [I]) wird Edukt 1 noch 1% bezogen auf Gesamtlösung an p-Toluolsulfonylisocyanat (TSI) (Sigma-Aldrich, 96%) hinzugegeben. Als Trocknungsmittel wird der Lösung 5% Molsieb (Carl-Roth, 4A, Perlform) zugegeben.

Vorbereitung der Diol-Lösung (Edukt 2): Edukt 2 wird aus N-Methyldiethanolamin (MDEA) (Sigma-Aldrich, ≥99%) in DMAc hergestellt. Die Konzentration liegt je nach PUR Gehalt im Produkt (siehe **Tabelle 1** Spalte [B]) bei 30-100%. Als Trocknungsmittel wird der Lösung 5% (Carl-Roth, 4A, Perlform) zugegeben.

Für die Nachbehandlung wurden Lösungen von Fixiermitteln Ethanol (EtOH) (Carl Roth, 99,5%, reinst), Ethylenglycol (Carl Roth, 99%, zur Synthese) und MDEA in DMAc hergestellt. Die Konzentration an Fixiermittel betrug jeweils 30%. Als Trocknungsmittel wurden den Lösungen 5% (Carl-Roth, 4A, Perlform) zugegeben.

Die Vorbereitung der Lösungen erfolgte in einem Glovebag unter Stickstoff Atmosphäre. Der verwendete Stickstoff (Linde, 99,8%) wurde zusätzlich über eine Trocknungssäule mit Glaswolle und Sicapent (Merck, Phosphorpentoxid, mit Indikator) geleitet um die Feuchte des Gases zu reduzieren.

Nach der Herstellung wurden die Lösungen mit einem Septum verschlossen und ausgeschleust. Unter Argon (Linde, 99,996) Überlagerung wurden die Edukte in den Prozessstrom integriert. Während der gesamten Durchführung erfolgte eine Überlagerung der Edukt- und Produktbehälter mit leichtem Argon Überdruck (0,14-0,2 bar Überdruck). Alle Behälter waren mit Septum ausgestattet um die Zugabe von Fixiermittel oder Zusatzstoffen zu ermöglichen (siehe **Tabelle 1** Spalten [H] und [I]).

Die Temperatur wurde mit einem Wasserbad Thermostat (Huber CC-205B) geregelt. Das Thermostat ist mit einer Kühlwendel ausgestattet, wodurch auch Temperaturen unter Raumtemperatur möglich sind. Die Kühlmedium Zufuhr erfolgt extern von der Haustechnik Anlage.

Die Prozesskontrolle erfolgte Online mit einem Fourier-Transformations-Infrarotspektrometer (FTIR) Gerät (Bruker Alpha II). Damit wurde der Isocyanat-Restgehalt bestimmt.

Zwischen jedem Versuch wurde das Reaktorsystem mit Fixiermittel Lösung Ethanol (EtOH) mit DMAc gespült bis zwei Reaktorverweilzeiten kein Isocyanat im FTIR detektierbar war.

**Beispiel 2:** Versuchsserie kontinuierlicher Reaktor 1

Die Versuchsserie umfasst Versuche 1-9 aus **Tabelle 1,** Spalte [A]. Die Lösungsvorbereitung erfolgt analog Beispiel 1. Es wurde ein Reaktor, wie in WO 2010/055034 A1 beschrieben, eingesetzt. Kurz, der Reaktor ist ein Fließreaktor, wobei die Reaktion in einer oder mehreren Röhren erfolgt. Die Edukte werden an einem Ende des Rohrsystems zugeführt und das Produkt wird an einem anderen Ende erhalten. Der Reaktor wird kontinuierlich betrieben. Die Röhren können in einer oder mehreren Platten angeordnet sein.

Für die erste Versuchsserie wurde der Reaktor mit einem Volumen an 17,5 ml verwendet (siehe **Tabelle 1** Spalte [F]). Zum Fördern der Medien wurden Kolbenhubpumpen (Knauer Azure, P4.1S und P2.1S) verwendet. Die Medien wurden über eine T Verbindung gemeinsam in den Reaktor geführt. Dabei wurden bei einer Temperatur [C] und einem Fluss [D] das Produkt [B] hergestellt. Dabei wurden die Parameter [H], [I], [M], [N], [O] und [P] variiert (Tabellen 1 und 2). Das Produkt zeigte einen Polyurethan-Gehalt [B] und die verbundenen Eigenschaften [J], [K] und [L] gemäß Tabelle 2. Die Maße des Rohrsystems in Setup 1 sind in der folgenden Tabelle dargestellt; die Rohre sind in Reihenfolge von oben nach unten beschrieben. Das Gesamtvolumen im Reaktor ist unten angegeben.

| Tabelle: Reaktor Setup 1 | |
|---|---|
| **Innendurchmesser / mm** | **Länge / m** |
| 1,00 | 2,22 |
| 1,50 | 1,11 |
| 2,00 | 0, 56 |
| 2,16 | 0, 56 |
| 2,32 | 0, 56 |
| 2,98 | 0, 56 |
| 4,00 | 0, 3 |
| | **17,5 ml Volumen** |

Versuche mit Setup 1 zeigten, dass dieses Setup nicht ideal angepasst war. Die Verweilzeiten in den kleinen Durchmessern (< 2,2 mm) ist im Vergleich zu den mittleren und großen Durchmessern (>= 2,2 mm) zu lang. Dadurch war es schwer die Molmasse zu kontrollieren. Die Versuche 1-9 zeigen, dass die Molmasse trotz relativ engen Temperaturfenster zwischen 243 017 Da und 8 913 Da variierte. Daneben wurden bei den Versuchen zwei Phasengemische im Endprodukt beobachtet. Die Zweiphasengemische zeigen, dass Nebenreaktionen ablaufen. Die dominanten Nebenreaktionen sind die Vernetzung und Polyurea-, Allophan-, Biuret-Synthese und (siehe Literatur [3]), welche zu Gelbildung führen. Genau diese Nebenreaktionen und Polyureabildung sind auch in den Beispielen der US 7795359 B2 zu sehen.

Die Daten zu Molmasse, Polydispersität und Viskosität in **Tabelle 2** spiegeln dabei nur die Eigenschaften der flüssigen Phase wieder. Die Gelphase wurde nicht analysiert, da nicht lösbar für die GPC Analyse und da die Viskosität außerhalb des Messbereichs liegt.

Der Anteil der Gelbildung erhöhte sich mit jedem Versuch, daher wurde das Setup erweitert und es wurde Reaktorsetup 2 entwickelt.

**Beispiel 3:** Versuchsserie kontinuierlicher Reaktor 2

Die Versuchsserie umfasst Versuche 10-12 aus **Tabelle 1,** Spalte [A]. Hier wurde das Reaktorsetup 1 um eine Reaktorzone erweitert um den Umsatz zu erhöhen. Durch den Wechsel zurück von großen auf kleinen Durchmesser verbessert sich die Durchmischung. Dies führt zu weniger Nebenreaktionen, da sich die Verweilzeitverteilung reduziert. Damit ergaben sich leichte Änderungen an den verfahrenstechnischen Parametern. Ansonsten war die Durchführung analog Beispiel 2.

| Tabelle: Reaktor Setup 2 | |
|---|---|
| **Innendurchmesser / mm** | **Länge / m** |
| 1,00 | 2,22 |
| 1,50 | 1,11 |

(fortgesetzt)

| Tabelle: Reaktor Setup 2 | |
|---|---|
| Innendurchmesser / mm | Länge / m |
| 2,00 | 0, 56 |
| 2,16 | 0, 56 |
| 2,32 | 0, 56 |
| 2,98 | 0, 56 |
| 4,00 | 0, 3 |
| 1,00 | 3, 08 |
| 1,50 | 1, 67 |
| 2,00 | 1, 11 |
| | 26,3 ml Volumen |

Die Gelbildung konnte dadurch nicht in den Griff bekommen werden. Der Sprung zurück auf kleine Durchmesser und der häufige Wechsel des Durchmessers (10) führt zu vielen schlecht durchspülten Totzonen (laminare Strömung). Der positive Effekt der erhöhten Durchmischung wird also durch die Erhöhung der Totzonen (negativer Effekt) überkompensiert. Es war auch hier nicht möglich die Produktion von einem (besonders bevorzugten) Prepolymer (siehe Nebenreaktionen in Beispiel 3; Molmasse) und Gelbildung zu trennen.

Die Rohre von Setup 2 wurden infolgedessen nach Versuch 12 durch Gelbildung vollständig blockiert. Das Setup wurde außer Betrieb genommen. Der nächste Schritt war die Entwicklung eines einfacheren Setups.

**Beispiel 4:** Versuchsserie kontinuierlicher Reaktor 3

Die Versuchsserie umfasst Versuch 13 aus **Tabelle 1,**
Spalte [A]. Hier wurde getestet, wie weit das Setup nach unten skalierbar ist mit nur einer Reaktorplatte, wodurch ein geringeres Reaktorvolumen resultiert (Tabelle 1, Spalte [F]). Darüber hinaus wurde die Effizienz der Nachbehandlung und Reinigung untersucht. Daneben dient das Setup als Vor-Test für ein robusteres Setup, um die Probleme (Geldbildung) aus den ersten beiden Setups zu eliminieren. Die Durchführung erfolgte analog Beispiel 2.

| Tabelle: Reaktor Setup 3 | |
|---|---|
| Innendurchmesser / mm | Länge / m |
| 1,00 | 0, 5 |
| 2,98 | 0, 3 |
| | **2,5 ml Volumen** |

Die Ergebnisse mit diesem Setup zeigen eine gute Kontrolle des Setups. Es konnten sehr niedrige Molmassen gezielt hergestellt werden. Gelbildung war nicht zu beobachten. Das Setup ist aber nicht für hohe Umsatzmengen ausgelegt. Daher wurde Setup 4 entwickelt.

**Beispiel 5:** Versuchsserie kontinuierlicher Reaktor 4

Die Versuchsserie umfasst Versuche 14-22 aus **Tabelle 1,** Spalte [A]. Aus den Erkenntnissen der Beispiele 2-4 wurde das Reaktorsetup 4 mit zwei Platten erstellt, wodurch ein größeres Reaktorvolumen resultiert (Tabelle 1, Spalte [F]). Hier wurden in Kombination mit Temperaturen [C] höhere Produktgehalte [B] erreicht. Dieses Beispiel zeigte die höchste Ausbeute bei guten Produkteigenschaften und deren Steuerbarkeit. Die Durchführung erfolgte analog Beispiel 2.

**Tabelle: Reaktor Setup 4**

| Innendurchmesser / mm | Länge / m |
|---|---|
| 2,16 | 1, 97 |
| 2,32 | 2,22 |
| 2,98 | 1.67 |
| | **28,2 ml Volumen** |

Der Aufbau aus einem kleinen Durchmesser (< 2,2) mit einem größeren Anteil von mittleren und großen Durchmessern (>= 2,2) zeigte sich als vorteilhaft bei der Synthese. Mit diesem Reaktorsystem war es erstmals möglich, eine breite Produktpalette (unterschiedliche Molmassen) zu erzeugen ohne die Gelbildung zu beobachten. Der Umsatz konnte so gut gesteuert werden, sodass auch ohne Quenchen die Produktqualität stabil bleibt.

Die Gelbildung trat auch in Folge nicht auf, wie in späteren Versuchen erkannt wurde. Das Setup wurde im Weiteren für die späteren Versuche 28-29 erneut eingesetzt.

**Beispiel 6:** Versuchsserie kontinuierlicher Reaktor 5

Die Versuchsserie umfasst Versuch 23 aus **Tabelle 1,** Spalte [A]. Auf Basis von Beispiel 5 wurde der Reaktor mit den Faktor 4 multipliziert (8 Platten) um den Durchsatz zu erhöhen. Die Produkteigenschaften bleiben wie in Tabelle 2 dargestellt gleichbleibend. Die Durchführung erfolgte analog Beispiel 2.

**Tabelle: Reaktor Setup 5**

| Innendurchmesser / mm | Länge / m |
|---|---|
| 2,16 | 7,85 |
| 2,32 | 8, 88 |
| 2,98 | 6, 66 |
| | **112,8 ml Volumen** |

In diesem Setup wurde der Reaktor für einen Versuch hochskaliert, um näher an die industrielle Produktion zu kommen. Dabei wurde das geometrische Verhältnis beibehalten und lediglich Reaktorvolumen und Durchsatz erhöht. Die Produkteigenschaften aus Versuch 23 waren dabei gleichbleibend gut und ohne Nebenreaktionen sowie Gelbildung.

**Beispiel 7:** Versuchsserie kontinuierlicher Reaktor 6

Die Versuchsserie umfasst Versuch 24 aus **Tabelle 1,**
Spalte [A]. Auf Basis von Beispiel 5 wurde der Reaktor mit dem Faktor 28 multipliziert (4 Reaktoren zu je 28 Platten) um den Durchsatz zu erhöhen. Die Produkteigenschaften bleiben wie in Tabelle 2 dargestellt gleichbleibend. Hier wurden aufgrund der Effizienz die Rohrdurchmesser optimiert.

Um die höheren Durchsätze zu ermöglichen wurde das Pumpensystem gewechselt. Zum Einsatz kamen Kolben Membranpumpen (Prominent Hydro H2PA, HP2AE040050SST0000R0000 und HP2AA040050SST000000000) mit Pulsationsdämpfern (Prominent PZ000008). Die restliche Durchführung erfolgte analog Beispiel 2. Auch bei noch höheren Umsätzen bleibt die Qualität und Steuerbarkeit von Produkteigenschaften bestehen.

**Tabelle: Reaktor Setup 6**

| Innendurchmesser / mm | Länge / m |
|---|---|
| 1,50 | 12,21 |
| 2,16 | 11,10 |
| 2,32 | 23,31 |
| 2,98 | 17,76 |

(fortgesetzt)

| Tabelle: Reaktor Setup 6 | |
|---|---|
| Innendurchmesser / mm | Länge / m |
| 4,00 | 5, 55 |
| 6, 00 | 4,44 |
| 10, 88 | 3, 33 |
| | **789,6 ml Volumen** |

Für einen industriellen Reaktor wurde eine Aufskalierung von Setup 5 auf Setup 6 getestet. Aus den Erkenntnissen der bisherigen Setups wurde die geometrische Zusammensetzung in der Tabelle oben gewählt. Der Vergleich von Setup 1 bis 4 zeigt, dass bei der geometrischen Zusammensetzung der Rohre die mittleren und hohen Durchmesser (>= 2,2 mm) den größeren Anteil ausmachen sollen, um die Produkteigenschaften bevorzugt steuern zu können. Setup 2 zeigt zudem, dass ein Wechsel zurück auf kleinere Durchmesser sowie die Anzahl der Durchmesserwechsel von 10 sich negativ auf die Produktqualität auswirkt. Setup 4 zeigt, dass zwei Durchmesserwechsel gut funktionieren. Um den Kriterien gerecht zu werden und ein möglichst hohes Produktionsvolumen zu erreichen, wurde bei Setup 6 auf maximal 6 Durchmesserwechsel gesetzt. Im Speziellen kann noch zwischen mittleren und größeren Durchmessern bei diesem Setup unterteilt werden. Kleine Durchmesser d1 sind < 2,2 mm, mittlere Durchmesser d2 >= 2,2 mm und < 4 mm, große Durchmesser d3 sind >= 4 mm.

Die Produkteigenschaften des Setups sind weiterhin gut bei hohem Umsatz. Vergrößerungen der Produktion sind als Vervielfachung dieses Setups vorgesehen.

**Beispiel 8:** Versuchsserie kontinuierlicher Reaktor 7

Die Versuchsserie umfasst Versuch 25 aus **Tabelle 1,** Spalte [A]. Um die Verfahrenstechnischen Grenzen auszutesten wurde ein Reaktor mit kleinem Innendurchmesser (0,5-0,75 mm) mit höheren Temperaturen (60 °C) und kurzer Verweilzeit (0,26 min) kombiniert. Die Durchführung erfolgte analog Beispiel 2. Dieses Beispiel bestätigt den breiten Anwendungsbereich des Verfahrens.

| Tabelle: Reaktor Setup 7 | |
|---|---|
| Innendurchmesser / mm | Länge / m |
| 0,50 | 0, 5 |
| 0,75 | 0, 56 |
| | **0,34 ml Volumen** |

Versuch 25 zeigt ein Produkt noch im großen Rahmen der Polymereigenschaften. Die bevorzugten Molmassen bzw. NCO Reste werden nicht mehr erreicht. Auch sind die Umsätze sehr beschränkt und es erfolgt auch Gelbildung als Nebenprodukt.

**Beispiel 9:** Versuchsserie kontinuierlicher Reaktor 8

Die Versuchsserie umfasst Versuch 26-27 aus **Tabelle** 1, Spalte [A]. Um die verfahrenstechnischen Grenzen auszutesten, wurde ein Reaktor mit großem Innendurchmesser (10-12 mm) mit variierender Verweilzeit (1,17 - 21,14 min) kombiniert. Die Durchführung erfolgte analog Beispiel 2. Dieses Beispiel bestätigt den breiten Anwendungsbereich des Verfahrens.

| Tabelle: Reaktor Setup 8 | |
|---|---|
| Innendurchmesser / mm | Länge / m |
| 10, 88 | 0, 3 |
| | **27,9 ml Volumen** |

Ähnlich Setup 7 ist dieses Setup nur beschränkt einsetzbar. Dem Reaktionsverlauf wird nicht Rechnung getragen. Dadurch kommt es besonders am Anfang zu einer schlechten Wärmeabfuhr. Dabei entsteht ein Temperaturgradient entlang des Strömungsprofils. Dies führt zu lokalen Überhitzungen. Diese lokal erhöhten Temperaturen führen zu unkontrollierten Nebenreaktionen mit Gelbildung. Versuche 26-27 zeigten starke Gelbildung. Es zeigt sich auch ein Anstieg der Polydispersität (PDI) auf 4,68 bzw. 3,04. Der Anstieg des PDI zeigt, dass sich das Setup von der idealen Verweilzeitverteilung entfernt. Darüber hinaus war das Setup nach den beiden Versuchen durch Gel blockiert und konnte nicht mehr eingesetzt werden.

Setup 4 mit einem ähnlichen Volumen (28,2 ml) ist daher deutlich bevorzugt.

**Beispiel 10:** Versuchsserie kontinuierlicher Reaktor 4

Die Versuchsserie umfasst Versuche 28-29 aus **Tabelle 1,** Spalte [A]. Um die verfahrenstechnischen und chemischen Grenzen auszutesten, wurde Reaktor aus Beispiel 5 mit abweichenden Versuchsparametern getestet. Die Durchführung erfolgt analog Beispiel 2 mit folgenden Abweichungen. Als Hydroxy-terminiertes Edukt wurde tert-Butyldiethanolamine (TBDEA) eingesetzt. Da mit TBDEA die Viskosität der Lösung bei Raumtemperatur höher ist, wurde das Edukt vortemperiert (40-80 °C). Dieses Beispiel bestätigt den breiten Anwendungsbereich des Verfahrens.

Für dieses Beispiel wurde wieder Reaktor Setup 4 eingesetzt. Es hat sich als sehr gut geeignet gezeigt, um konstante Produktqualität zu erzeugen.

Die Reaktor Setups 4, 5 und 6 ergeben die besten Konfigurationen, um die Polymereigenschaften am besten steuern zu können. **Tabelle 1:** Versuchsparameter Polyurethan(PUR)-Prepolymer Synthese Teil 1.

| [A] | [B] | [C] | [D] | [E] | [F] | [G] | [H] | [I] |
|---|---|---|---|---|---|---|---|---|
| Versuch Nr. | c (PUR) - PUR Gehalt Produkt / m% | T - Temperatur / K | Durchsatz ml/min | c - Überschuss Edukt 2 / mol% | Volumen Reaktor / ml | NCO Reste nach Reaktor / mol% | Nachbehandlung | Vorbehandlung |
| 1 | 8 | 298,15 | 6,45 | 5 | 17,5 | 10 | keine | DMAc |
| 2 | 17 | 293,15 | 6,45 | 5 | 17,5 | 15 | keine | DMAc |
| 3 | 35 | 293,15 | 6, 67 | 5 | 17,5 | 20 | keine | DMAc, TSI |
| 4 | 35 | 323,15 | 6, 67 | 5 | 17,5 | 10 | keine | DMAc, TSI |
| 5 | 35 | 293,15 | 2,23 | 5 | 17,5 | 5 | keine | DMAc, TSI |
| 6 | 35 | 293,15 | 2,23 | 5 | 17,5 | 5 | EtOH quench | DMAc, TSI |
| 7 | 35 | 293,15 | 4,44 | 5 | 17,5 | 7 | EtOH quench | DMAc,TSI |
| 8 | 35 | 323,15 | 2,23 | 5 | 17,5 | 5 | EtOH quench nach 16 h | DMAc,TSI |
| 9 | 35 | 303,15 | 4,44 | 5 | 17,5 | 7 | EtOH quench | DMAc, TSI |
| 10 | 35 | 323,15 | 4,5 | 15 | 26, 3 | 4 | keine | DMAc |
| 11 | 35 | 323,15 | 4,5 | 15 | 26, 3 | 4 | MDEA quench | DMAc |
| 12 | 35 | 323,15 | 4,5 | 15 | 26, 3 | 4 | EtOH quench | DMAc |
| 13 | 35 | 298,15 | 1,32 | 15 | 2,5 | 5 | EtOH quench | DMAc, rühren |
| 14 | 40 | 303,15 | 3,95 | 22 | 28,2 | <1 | EtOH quench | DMAc,rühren, TSI |
| 15 | 40 | 303,15 | 5,98 | 22 | 28,2 | 2 | EtOH quench | DMAc,kühlen, TSI |
| 16 | 40 | 303,15 | 3,95 | 22 | 28,2 | <1 | Etglycol | DMAc, TSI |
| 17 | 40 | 303,15 | 3,95 | 22 | 28,2 | <1 | MDEA | DMAc, TSI |
| 18 | 40 | 303,15 | 3,95 | 22 | 28,2 | <1 | keine | DMAc, TSI |
| 19 | 45 | 313,15 | 3,95 | 22 | 28,2 | <1 | EtOH quench | DMAc, TSI |
| 20 | 50 | 333,15 | 5,98 | 22 | 28,2 | <1 | EtOH quench | DMAc, TSI |
| 21 | 55 | 353,15 | 5,98 | 22 | 28,2 | <1 | EtOH quench | DMAc, TSI |
| 22 | 60 | 313,15 | 3,95 | 22 | 28,2 | <1 | EtOH quench | DMAc, TSI |
| 23 | 40 | 303,15 | 15,8 | 22 | 112,8 | <1 | EtOH quench | DMAc, TSI |

(fortgesetzt)

| [A] Versuch Nr. | [B] c (PUR) - PUR Gehalt Produkt /m% | [C] T - Temperatur / K | [D] Durchsatz ml/min | [E] c - Überschuss Edukt 2 / mol% | [F] Volumen Reaktor / ml | [G] NCO Reste nach Reaktor / mol% | [H] Nachbehandlung | [I] Vorbehandlung |
|---|---|---|---|---|---|---|---|---|
| 24 | 40 | 303,15 | 110,6 | 22 | 789,6 | <1 | EtOH quench | DMAc, TSI |
| 25 | 35 | 333,15 | 1,32 | 30 | 0,34 | 6 | EtOH quench | DMAc, TSI |
| 26 | 35 | 283,15 | 1,32 | 22 | 27,9 | <1 | EtOH quench | DMAc, TSI |
| 27 | 35 | 313,15 | 23,92 | 22 | 27,9 | <1 | EtOH quench | DMAc, TSI |
| 28 | 40 | 303,15 | 1,975 | 22 | 28,2 | <1 | EtOH quench | DMAc, TSI, Vortemperierung 40 °C |
| 29 | 35 | 303,15 | 3,95 | 22 | 28,2 | <1 | EtOH quench | DMAc, TSI, Vortemperierung 80 °C |

**Tabelle 2:** Versuchsparameter PUR-Prepolymer Synthese Teil 2.

| [B] | [J] | [K] | [L] | [M] | [N] | [O] | [P] |
|---|---|---|---|---|---|---|---|
| Versuch Nr. | M - Mw / Da | PDI/ - | Viskosität / mPas (25 °C) | Oberfläche/Volumen/ $m^2/m^3$ | Reaktor - spezifische Oberflächenbelastung/ $l/hm^2$ | Reaktor - spezifische Volumensbelastung/ $l/hm^3$ | t - Hydrodynamische Verweilzeit / min |
| 1 | 72 073 | 2,83 | 392 | 1855 | 11,92 | 22114 | 2,71 |
| 2 | 63 043 | 2,17 | 776 | 1855 | 11,92 | 22114 | 2,71 |
| 3 | 113 269 | 3,85 | n.b. | 1855 | 12,33 | 22869 | 2,62 |
| 4 | 243 017 | 4,1 | n.b. | 1855 | 12,33 | 22869 | 2,62 |
| 5 | 205 199 | 1,44 | n.b. | 1855 | 4,12 | 7646 | 7,85 |
| 6 | 15 864 | 1,87 | 241 | 1855 | 4,12 | 7646 | 7,85 |
| 7 | 8 913 | 2,33 | 143 | 1855 | 8,20 | 15223 | 3,94 |
| 8 | 44 074 | 1,62 | 2462 | 1855 | 4,12 | 7646 | 7,85 |
| 9 | 16 141 | 1,35 | 281 | 1855 | 8,20 | 15223 | 3,94 |
| 10 | 44 587 | 1,96 | 2646 | 2105 | 4,88 | 10266 | 5,84 |
| 11 | 39 057 | 1,57 | 2208 | 2105 | 4,88 | 10266 | 5,84 |
| 12 | 38 569 | 1,74 | 2079 | 2105 | 4,88 | 10266 | 5,84 |
| 13 | 5 409 | 1,82 | 127 | 1752 | 18, 08 | 31680 | 1, 89 |
| 14 | 10 459 | 1,4 | 376 | 1599 | 5,25 | 8404 | 7,14 |
| 15 | 6 349 | 1,19 | 264 | 1599 | 7,96 | 12723 | 4,72 |
| 16 | 9 548 | 1,72 | 341 | 1599 | 5,25 | 8404 | 7,14 |
| 17 | 10 017 | 1,66 | 369 | 1599 | 5,25 | 8404 | 7,14 |
| 18 | 12 511 | 1,81 | 429 | 1599 | 5,25 | 8404 | 7,14 |
| 19 | 21 502 | 1,94 | 1928 | 1599 | 5,25 | 8404 | 7,14 |
| 20 | 89 058 | 2,53 | n.b. | 1599 | 7,96 | 12723 | 4,72 |
| 21 | 183 062 | 2,84 | n.b. | 1599 | 7,96 | 12723 | 4,72 |
| 22 | 25 053 | 1,65 | 29349 | 1599 | 5,25 | 8404 | 7,14 |
| 23 | 13 634 | 1,47 | 453 | 1599 | 5,25 | 8404 | 7,14 |

(fortgesetzt)

| [B] Versuch Nr. | [J] M - Mw / Da | [K] PDI / - | [L] Viskosität / mPas (25 °C) | [M] Oberfläche/Volumen / m²/m³ | [N] Reaktor - spezifische Oberflächenbelastung / l/hm² | [O] Reaktor - spezifische Volumensbelastung / l/hm³ | [P] t - Hydrodynamische Verweilzeit / min |
|---|---|---|---|---|---|---|---|
| 24 | 14 539 | 1,56 | 497 | 1599 | 5,25 | 8404 | 7,14 |
| 25 | 53 283 | 2,13 | 4860 | 6156 | 37,84 | 232941 | 0,26 |
| 26 | 19 526 | 4,68 | 384 | 367 | 7,73 | 2839 | 21,14 |
| 27 | 12 957 | 3,04 | 218 | 367 | 140,02 | 51441 | 1,17 |
| 28 | 24 247 | 1,83 | 1256 | 1599 | 2,63 | 4202 | 14,28 |
| 29 | 11 036 | 2,19 | 193 | 1599 | 5,25 | 8404 | 7,14 |

**Tabelle 3:** Versuchsparameter PUR-Prepolymer Synthese Teil 3.

| [B] | [Q] | [R] | [S] | [T] |
|---|---|---|---|---|
| Versuch Nr. | Spezifische Dichte [-] | Wassergehalt PUR [ppm] | Metallgehalt (Fe+Cu) [ppm] | HAZEN Farbzahl [ppm] |
| 1 | 1,1 | >4 000 | n.b. | 248 |
| 2 | 1,1 | >4 000 | 4,7 | 287 |
| 3 | >1,2 | n.b. | n.b. | 347 |
| 4 | >1,2 | n.b. | n.b. | 263 |
| 5 | >1,2 | n.b. | n.b. | 211 |
| 6 | 1,05 | 3 168 | 3,6 | 184 |
| 7 | 1 | 3 864 | 3,1 | 238 |
| 8 | 1 | n.b. | n.b. | 157 |
| 9 | 1 | n.b. | n.b. | 189 |
| 10 | 1,2 | n.b. | n.b. | 162 |
| 11 | 1,2 | n.b. | n.b. | 158 |
| 12 | 1,2 | 2 841 | 3,2 | 174 |
| 13 | 0,95 | 2 593 | 3,0 | 167 |
| 14 | 1,1 | 1 849 | 3,9 | 128 |
| 15 | 1,05 | n.b. | n.b. | 152 |
| 16 | 1,1 | 1 527 | 2,4 | 86 |
| 17 | 1,1 | 1 473 | 3,6 | 74 |
| 18 | 1,1 | 1 892 | 3,1 | 63 |
| 19 | 1,15 | n.b. | n.b. | 42 |
| 20 | >1,2 | n.b. | n.b. | 183 |
| 21 | >1,2 | n.b. | n.b. | 163 |
| 22 | >1,2 | n.b. | n.b. | 159 |
| 23 | 1,1 | n.b. | n.b. | 107 |
| 24 | 1,1 | n.b. | n.b. | 73 |
| 25 | >1,2 | n.b. | n.b. | 284 |
| 26 | 1,1 | 1 275 | 3,4 | 53 |
| 27 | 1,05 | n.b. | n.b. | 75 |
| 28 | 1,15 | n.b. | n.b. | 118 |
| 29 | 1 | n.b. | n.b. | 41 |

In manchen Versuchen war die Viskosität (> 100 000 mPa s) nicht bestimmbar (n.b.). Dies liegt außerhalb des Zielbereichs. Das tritt auf, wenn hohe Molmassen und hohe Polyurethan-Gehalte zusammenfallen.

In den Versuchen 1-5 waren hohe Anteile an Isocyanat-Resten nach dem Reaktor vorhanden. Ohne Nachbehandlung reagierte das Produkt nach und es kommt dann zu sehr hohen Molmassen. Neben der hohen Molmassen kann es auch zu Nebenreaktionen kommen. Dadurch wurde die Viskosität weiter erhöht. Diese Produkteigenschaften entsprechen nicht dem Ziel, weil die Molmasse direkt nach dem Reaktor durch Nachreaktionen nicht bestimmt werden konnte.

Dazu wurde ein Modell entwickelt, um die Produkteigenschaften, im speziellen die Molmasse und Viskosität, in Abhängigkeit der Reaktionsparameter voraus sagen zu können. Das Modell ist gültig für die genannten Bereiche zu Molmasse, Temperatur, Molverhältnis und Verweilzeit. Die Verweilzeit ist auch indirekt abhängig von den verfahrenstechnischen Parametern wie Durchfluss, Volumen, Oberfläche/Volumen Verhältnis, der Reaktor-spezifischen Oberflächenbelastung sowie der Reaktor-spezifischen Volumenbelastung. Das Modell wurde wie folgt hergeleitet.

Zur Modellierung wurden verschiedene Ansätze verwendet. Der Einfluss der Temperatur ist Analog zu Arrhenius mit der allgemeinen Formel:

$$k_T = A_T * e^{\frac{-E_A}{RT}}$$

dabei ist:

$k(T)$ - Reaktionsgeschwindigkeitskonstante in Abhängigkeit der Temperatur (2. Ordnung) [$m^3$ $mol^{-1}$ $s^{-1}$]
$A(T)$ - präexponentieller Faktor Temperatur [-]
$E(A)$ - Aktivierungsenergie [$J$ $mol^{-1}$]
$R$ - Universelle Gaskonstante [8,314 $J$ $K^{-1}$ $mol^{-1}$]
$T$ - Temperatur [K]

In Anlehnung an Arrhenius wird die Formel wie folgt vereinfacht. Es bleiben zwei Konstanten um die Temperaturabhängigkeit zu bestimmen.

$$k_T = A_T * e^{K_T * T}$$

dabei ist:

$k(T)$ - Reaktionsgeschwindigkeitskonstante bzw. Molmasseneinfluss der Temperatur [Da]
$K(T)$ - exponentieller Faktor Temperatur [$K^{-1}$]
$A(T)$ - präexponentieller Faktor Temperatur [Da]
$T$ - Temperatur [K]

Daraus ergibt sich der Temperatureinfluss.

Die Verweilzeit ist gesamt gesehen eine logarithmische Funktion. In dem hier definierten Bereich bewegen sich die Einflüsse im Bereich der starken Steigung. Um die Berechnung zu vereinfachen wurde daher ein linearer Ansatz für die Verweilzeit verwendet. Vor allem, weil bei einer Verweilzeit von 0 maximal die mittlere Molmasse der Monomere erreicht wird.

Somit ergibt sich für die Abhängigkeit der Verweilzeit:

$$k_t = A_t * t$$

dabei ist:

$k(t)$ - Reaktionsgeschwindigkeitskonstante bzw. Molmasseneinfluss in Abhängigkeit der Verweilzeit [Da]
$A(t)$ - linearer Faktor Verweilzeit [Da $min^{-1}$]
$t$ - Verweilzeit [min]

Der dritte große Einflussfaktor ist der Molüberschuss eines Monomers (Edukts). Je höher der Überschuss ist, desto kleinere Molmassen werden erreicht. Umgekehrt werden hohe Molmassen nur bei nahezu identischem Verhältnis erreicht. Daher ist das maximum bei gleichen Mengen an Monomeren gegeben und das Minimum bei vollem Überschuss eines Monomers. Der allgemeinen Tendenz folgt eine Exponentialfunktion mit negativem Exponenten.

Bei der Produktion von Prepolymeren sind niedrigere Molmassen bevorzugt und daher liegt meist ein Monomer im Überschuss vor. Je nach Produkt kann dieser zwischen 2-30% bevorzugt zwischen 5-22% liegen. In diesem Bereich findet mit einem linearen Ausgleich eine entsprechende Genauigkeit statt.

Somit ergibt sich für die Abhängigkeit des Molüberschusses:

$$k_c = A_c * c$$

wobei definiert ist:

k(c) - Reaktionsgeschwindigkeitskonstante bzw. Molmasseneinfluss in Abhängigkeit des Überschusses [Da]
A(c) - linearer Faktor molarer Überschuss eines Monomeres [Da $mol^{-1}$]
c - molarer Überschuss eines Monomeres [mol%]

Werden nun diese drei Abhängigkeiten kombiniert kann die zu erwartende Molmasse berechnet werden nach:

$$M_k(T, t, c) = k_T + k_t - k_c$$

Dies entspricht nach einsetzen folgender Gesamtformel:

$$M_k(T, t, c) = A_T * e^{K_T * T} + A_t * t - A_c * c$$

dabei ist:
$M_k(T,t,c)$ - Molmasse in Abhängigkeit von Temperatur, Verweilzeit und Konzentration [Da].
In diese Gesamtformel für die Molmassenabhängigkeit, werden nun die experimentellen Daten für Temperatur T (siehe **Tabelle 1** - Spalte C), Überschuss c (siehe **Tabelle** 1 - Spalte E) und Verweilzeit (siehe **Tabelle 2** - Spalte P) eingesetzt.
Im nächsten Schritt erfolgt die Ermittlung der Konstanten für das Modell. Dafür wurden im ersten Schritt jeweils Experimente, bei denen nur ein Parameter aus Temperatur T, Überschuss c und Verweilzeit t variiert, für einen Ausgleich verwendet. Für Temperatur und Überschuss c wurde ein linearer Ausgleich verwendet. Bei der Temperatur findet ein exponentieller Ausgleich statt. Daraus ergeben sich die Startwerte für die Konstanten A(T), K(T), A(t) und A(c) .
Abweichung von Modell und Experimenten wurde über Minimierung der Fehlerquadrate erreicht. Als Nebenbedingungen wurden dabei eine maximale Einzelwertabweichung der Molmasse von Modell zu Experiment von ≤ 25% toleriert. Zusätzlich war als Nebenbedingung eine durchschnittliche Abweichung von ≤12% definiert. Für die Modellierung der Konstanten A(T), K(T), A(t) und A(c) wurde das verallgemeinerte reduzierte Gradienten Verfahren (GRG - generalized reduced gradient) für nicht lineare Gleichungssysteme angewandt.
Zur Validierung der Konstanten wurden die Startwerte für die Modellierung verdoppelt bzw. halbiert. Es wurden verschiedene weitere lokale Minima für die Kostanten in der Lösungsebene gefunden. Durch kein gefundenes Ergebnis ergab sich eine Signifikate Verbesserung der Modellgenauigkeit mit Bezug auf Fehlerquadrate und mittlere Abweichung.
Nach Modellierung und Runden der nicht signifikanten Stellen sind die Zahlenwerte für die Konstanten folgende:

A(T) - 0,00039 Da
K(T) - 0,05733 $K^{-1}$
A(t) - 1354 Da $min^{-1}$
A(c) - 534 Da $mol^{-1}$

Die Viskosität ist ein wichtiger Punkt für den weiteren Einsatz der Produkte sowie der Produktion. Zu hohe Viskosität erschwert das Fördern bei der Anwendung als auch während der Herstellung. Darüber hinaus kann es bei hoher Viskosität nur schwer weiterverarbeitet oder zugemischt werden. Zu geringe Viskosität reduziert wieder die Ausbeute. Daher ist eine maximal zulässige Viskosität bei den gewünschten Produkteigenschaften das Ziel.
Mit dem erwarteten PUR Gehalt im Produkt und der Molmasse kann die Viskosität berechnet werden nach:

$$\eta(M, c) = \eta_M \eta_c * A_\eta$$

dabei ist

$\eta(M,c)$ - gesamte Viskosität in Abhängigkeit von Molmasse und Konzentration [mPa s]
$\eta(M)$ - Viskosität in Abhängigkeit der Molmasse [mPa s]
$\eta(c)$ - Viskosität in Abhängigkeit der PUR Konzentration [mPa s]
A($\eta$) - Faktor Abhängigkeitsausgleich [-]

Es beeinflussen Molmasse und Polymerkonzentration die Viskosität exponentiell. Daher wurden für die beiden Faktoren folgende Modellformeln angesetzt:

$$\eta_M = A_M * e^{K_M * M}$$

$$\eta_c = A_{PUR} * e^{K_{PUR} * c_{PUR}}$$

dabei ist

A(M)- präexponentieller Faktor Molmasse [mPa s]
K(M)- exponentieller Faktor Molmasse [Da$^{-1}$]
A(PUR)- präexponentieller Faktor PUR Konzentration [mPa s]
K(PUR)- exponentieller Faktor PUR Konzentration [m%$^{-1}$]
M - Molmasse [Da]
c(PUR) - PUR Konzentration Produkt[m%]

Dies entspricht nach Einsätzen folgendem Zusammenhang zwischen Viskosität und Polymereigenschaften:

$$\eta(M,c) = A_M * e^{K_M * M} * A_{PUR} * e^{K_{PUR} * c_{PUR}} * A_\eta$$

In diese Formel für die Viskositätsabhängigkeit, werden nun die experimentellen Daten für PUR Gehalt im Produkt - c(PUR) (siehe **Tabelle** 1 - Spalte B) und Molmasse - M (siehe **Tabelle** 2 - Spalte J) eingesetzt.

Im nächsten Schritt erfolgt die Ermittlung der Konstanten für das Modell. Dafür wurden im ersten Schritt jeweils Experimente, bei denen ein Parameter aus PUR Gehalt c(PUR) und Molmasse M variiert, für einen Ausgleich verwendet. Für die gewählten Experimente, für den PUR Gehalt Ausgleich, wurde das Molmassenbereich von 8 - 22 000 Da gewählt.

Es findet jeweils ein exponentieller Ausgleich statt. Daraus ergeben sich Startwerte für die Konstanten A(PUR), K(PUR), A(M) und K(M). Diese Startwerte wurden wiederum für die verwendeten Experimente bei gleichem PUR Gehalt und Molmasse eingesetzt. Für die "gleiche" Molmasse wurde dazu ein Mittelwert aus den für das Molmassenfenster verwendeten Molmassen gebildet. Die damit errechneten Viskositäten $\eta(M,c)$ bei gleicher Molmasse $\eta(M)$ bzw. PUR Gehalt $\eta(c)$ zeigen eine Abweichung zu den Viskositäten aus den Experimenten. Die Abweichung ist ein Multiplikator Faktor. Der Mittelwert aus den Abweichungsfaktoren ergibt somit den Startwert für den Faktor Abhängigkeitsausgleich A($\eta$).

Geringe Abweichung von Modell und Experimenten wurde über Minimierung der Fehlerquadrate erreicht. Als Nebenbedingung wurde dabei eine maximale Einzelwertabweichung der Viskosität von Modell zu Experiment von ≤20% toleriert. Zusätzlich war als Nebenbedingung eine durchschnittliche Abweichung von ≤7% definiert. Für die Modellierung der Konstanten A(PUR), K(PUR), A(M), K(M), A($\eta$) wurde das verallgemeinerte reduzierte Gradienten Verfahren für nicht lineare Gleichungssysteme angewandt.

Zur Validierung der Konstanten wurden die Startwerte für die Modellierung verdoppelt bzw. halbiert. Es wurden verschiedene weitere lokale Minima für die Kostanten in der Lösungsebene gefunden. Durch kein gefundenes Ergebnis ergab sich eine signifikante Verbesserung der Modellgenauigkeit mit Bezug auf Fehlerquadrate und mittlere Abweichung.

Nach Modellierung und Runden der nicht signifikanten Stellen sind die Zahlenwerte für die Konstanten folgende:

A(PUR) - 0,8319 mPa s
K(PUR) - 0,1561 m%$^{-1}$
A(M) - 73 mPa s
K(M) - 0,0000829 Da$^{-1}$
A($\eta$) - 0,00502

Mit dem Modell und dem Verfahren konnten sowohl Produkteigenschaften als auch Reaktionsbedingungen vorhergesagt werden.

**Patentansprüche**

**1.** Ein kontinuierliches Verfahren zur Herstellung eines Prepolymers in einem Reaktor mit einem länglichen Hohlkörper, wobei mindestens zwei Edukte an einem Ende einer Reaktionszone des Hohlkörpers kontinuierlich eingeführt werden, die mindestens zwei Edukte in der Reaktionszone polymerisiert werden und Prepolymer an einem anderen Ende der Reaktionszone ausgeführt wird, wobei der längliche Hohlkörper in der Reaktionszone mindestens einen ersten und einen zweiten Teilbereich aufweist, wobei der Hohlkörper im zweiten Teilbereich einen Innendurchmesser hat, der um mindestens 10% größer ist als der Innendurchmesser des Hohlkörpers im ersten Teilbereich und der zweite Teilbereich eine Länge hat, die größer-gleich der Länge des ersten Teilbereichs ist.

2. Verfahren nach Anspruch 1, wobei das Prepolymer ein Polyurethan-Prepolymer ist und eines der Edukte mindestens eine Alkohol-Gruppe und eines der Edukte mindestens eine Isocyanat-Gruppe aufweist.

3. Verfahren nach einem der Ansprüche 1 oder 2, wobei im zweiten Teilbereich der Innendurchmesser mindestens um 20%, vorzugsweise mindestens 30%, speziell bevorzugt mindestens 40%, besonders bevorzugt mindestens 50%, größer ist als der Innendurchmesser des ersten Teilbereichs.

4. Verfahren nach einem der Ansprüche 1 bis 3, wobei der zweite Teilbereich eine Länge hat, die um mindestens 10% größer ist als die Länge des ersten Teilbereichs.

5. Verfahren nach einem der Ansprüche 1 bis 4, wobei der erste Teilbereich beim Einlass in die Reaktionszone ist und/oder der zweite Teilbereich bei der Ausfuhr der Reaktionszone ist.

6. Verfahren nach einem der Ansprüche 1 bis 5, wobei der Innendurchmesser über die Länge der Reaktionszone mindestens 3 Durchmesser-Staffelungen aufweist.

7. Verfahren nach Anspruch 6, wobei ein mittlerer Teilbereich zwischen dem ersten und dem zweiten Teilbereich vorgesehen ist, wobei der mittlere Teilbereich einen Innendurchmesser hat, der größer ist als der Innendurchmesser des ersten Teilbereichs und kleiner ist als der Innendurchmesser des zweiten Teilbereichs.

8. Verfahren nach einem der Ansprüche 6 oder 7, wobei der zweite Teilbereich Unterteilbereiche aufweist mit mindestens zwei unterschiedlichen Innendurchmessern, wobei ein zum ersten Teilbereich näher liegender Unterteilbereich einen kleineren Innendurchmesser aufweist als ein Unterteilbereich der weiter vom ersten Teilbereich liegt.

9. Verfahren nach einem der Ansprüche 1 bis 8, wobei die Reaktionszone eine Länge von mindestens 50 cm, vorzugsweise von mindestens 1 m, aufweist; und/oder der Hohlkörper im ersten Teilbereich einen Innendurchmesser von <2,2 mm hat und/oder der Hohlkörper im zweiten Teilbereich einen Innendurchmesser von ≥2,2 mm hat

10. Verfahren nach einem der Ansprüche 1 bis 9, wobei die Reaktionszone ein Volumen von mindestens 25 ml, vorzugsweise von mindestens 100 ml, insbesondere bevorzugt von mindestens 500 ml, aufweist; und/oder wobei die die Reaktionszone ein Volumen von maximal 5 l, vorzugsweise von maximal 3 l, insbesondere bevorzugt von maximal 2 l, aufweist

11. Verfahren nach einem der Ansprüche 1 bis 10, wobei die Verweilzeit der zu Prepolymer polymerisierenden und polymerisierten Edukte in der Reaktionszone mindestens 2 min ist, vorzugsweise 3 min bis 15 min, insbesondere bevorzugt 4 min bis 10 min.

12. Verfahren nach einem der Ansprüche 1 bis 11, wobei die Edukte in einer Lösung in die Reaktionszone eingebracht werden und die Konzentration der Edukte zusammen 20% bis 60% (Masse-%) ist.

13. Verfahren nach einem der Ansprüche 1 bis 12, wobei eines der Edukte gegenüber einem anderen der Edukte in einem Überschuss in die Reaktionszone eingebracht wird, vorzugsweise mit einem Überschuss von mindestens 5 % (Mol-%), besonders bevorzugt von mindestens 10% (Mol-%).

14. Verfahren nach einem der Ansprüche 2 bis 12, in Kombination mit Anspruch 2 zur Herstellung eines Polyurethan-Prepolymers, wobei der Reaktor mit einer Temperatur (T), einer Verweilzeit (t), und einem optionalen molaren Überschuss eines Edukts (c) betrieben wird, sodass ein angepeiltes mittleres Molekulargewicht des Prepolymers von 5000 Da bis 80000 Da gemäß der Formel

$$M_k(T, t, c) = A_T * e^{K_T * T} + A_t * t - A_c * c$$

wobei

$M_k(T,t,c)$ ist das angepeilte mittlere Molekulargewicht des Prepolymers,
A(T) ist 0,00039 Da,
K(T) ist 0,05733 K$^{-1}$,
A(t) ist 1354 Da min$^{-1}$,
A(c) ist 534 Da mol$^{-1}$,
T ist die Temperatur in K,
t ist die Verweilzeit in min,
c ist der molare Überschuss eines Edukts in mol%,
erhalten wird.

15. Reaktor geeignet zur Durchführung eines Verfahrens nach einem der Ansprüche 1 bis 14, wobei der Reaktor einen länglichen Hohlkörper hat, mit einem Einlass an einem Ende und einem Auslass an einem anderen Ende des Hohlkörpers, wobei der längliche Hohlkörper mindestens einen ersten und einen zweiten Teilbereich aufweist, wobei der Hohlkörper im ersten Teilbereich einen Innendurchmesser von <2,2 mm hat und der Hohlkörper im zweiten Teilbereich einen Innendurchmesser von ≥2,2 mm hat, wobei der Hohlkörper im zweiten Teilbereich einen Innendurchmesser hat, der um mindestens 10% größer ist als der Innendurchmesser des Hohlkörpers im ersten Teilbereich, der erste und zweite Teilbereich unabhängig voneinander jeweils eine Länge von ≥ 1 m haben, und der zweite Teilbereich eine Länge hat, die größer-gleich der Länge des ersten Teilbereichs ist.

Europäisches
Patentamt

European
Patent Office

Office européen
des brevets

# EUROPÄISCHER RECHERCHENBERICHT

Nummer der Anmeldung

**EP 22 21 3726**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 669 385 A1 (BAYER MATERIALSCIENCE LLC [US]) 14. Juni 2006 (2006-06-14) | 1-14 | INV. C08G18/08 |
| Y | * Zusammenfassung * <br> * Absatz [0009] * <br> * Ansprüche; Beispiel 1a * <br> ----- | 1-14 | C08G18/10 <br> C08G18/32 <br> C08G18/76 <br> B01J19/00 |
| X | US 5 471 037 A (GOETHEL PETER J [US] ET AL) 28. November 1995 (1995-11-28) | 1-14 | C08G18/71 |
| Y | * Zusammenfassung * <br> * Spalte 3, Zeilen 22-35 * <br> * Spalte 6, Zeilen 12-44 * <br> * Spalte 8, Zeilen 16-21 * <br> * Abbildungen 1, 6; Beispiel 1 * <br> ----- | 1-14 | |
| Y,D | EP 2 287 228 A2 (MOMENTIVE PERFORMANCE MAT INC [US]) 23. Februar 2011 (2011-02-23) <br> * Zusammenfassung * <br> * Absätze [0006] - [0011], [0030] - [0033]; Ansprüche; Beispiel 2 * <br> ----- | 1-14 | |
| Y | JP 2019 202477 A (TOYO INK SC HOLDINGS CO LTD; TOYO MORTON LTD; TOYOCHEM CO LTD) 28. November 2019 (2019-11-28) <br> * Zusammenfassung; Abbildung 2 * <br> ----- | 1-14 | **RECHERCHIERTE SACHGEBIETE (IPC)** <br><br> C08G <br> B01J |

~~Der vorliegende Recherchenbericht wurde für alle Patentansprüche erstellt~~

| Recherchenort | Abschlußdatum der Recherche | Prüfer |
|---|---|---|
| **München** | **26. Mai 2023** | **Nazario, Luis** |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.....................................................................................
& : Mitglied der gleichen Patentfamilie, übereinstimmendes
Dokument

EPO FORM 1503 03.82 (P04C03)

Europäisches
Patentamt

European
Patent Office

Office européen
des brevets

**Nummer der Anmeldung**

**EP 22 21 3726**

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**Siehe Ergänzungsblatt B**

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**1-14**

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

**EP 22 21 3726**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-14

   Anspruch 1 (und Ansprüche 2-14) betrifft ein Verfahren zur Herstellung eines Prepolymers in einem Reaktor mit einem länglichen Hohlkörper. Der längliche Hohlkörper weist mindestens einen ersten und einen zweiten Teilbereich auf. Der Hohlkörper im zweiten Teilbereich hat einen Innendurchmesser, der um mindestens 10% größer ist als der Innendurchmesser des Hohlkörpers im ersten Teilbereich. Ferner hat der zweite Teilbereich eine Länge, die größer-gleich der Länge des ersten Teilbereichs ist.
   ---

2. Anspruch: 15

   Anspruch 15 betrifft einen Reaktor, der Reaktor einen länglichen Hohlkörper hat. Der längliche Hohlkörper weist mindestens einen ersten und einen zweiten Teilbereich auf. Der Hohlkörper im ersten Teilbereich hat einen Innendurchmesser von <2,2 mm und der Hohlkörper im zweiten Teilbereich hat einen Innendurchmesser von >=2, 2 mm. Der Hohlkörper im zweiten Teilbereich hat einen Innendurchmesser, der um mindestens 10% größer ist als der Innendurchmesser des Hohlkörpers im ersten Teilbereich. Der erste und zweite Teilbereich unabhängig voneinander haben jeweils eine Länge von >= 1 m, und der zweite Teilbereich hat eine Länge, die größer-gleich der Länge des ersten Teilbereichs ist.
   ---

**ANHANG ZUM EUROPÄISCHEN RECHERCHENBERICHT
ÜBER DIE EUROPÄISCHE PATENTANMELDUNG NR.**

EP 22 21 3726

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2023

| Im Recherchenbericht angeführtes Patentdokument | Datum der Veröffentlichung | Mitglied(er) der Patentfamilie | Datum der Veröffentlichung |
|---|---|---|---|
| EP 1669385 A1 | 14-06-2006 | AT 508153 T | 15-05-2011 |
| | | AU 2005242169 A1 | 22-06-2006 |
| | | CA 2528214 A1 | 08-06-2006 |
| | | CN 1854126 A | 01-11-2006 |
| | | EP 1669385 A1 | 14-06-2006 |
| | | ES 2364336 T3 | 31-08-2011 |
| | | JP 2006161050 A | 22-06-2006 |
| | | KR 20060064540 A | 13-06-2006 |
| | | MX PA05013361 A | 12-06-2006 |
| | | TW 200643057 A | 16-12-2006 |
| | | US 2006122357 A1 | 08-06-2006 |
| US 5471037 A | 28-11-1995 | BR 9303387 A | 22-03-1994 |
| | | DE 4327805 A1 | 24-02-1994 |
| | | JP 3519430 B2 | 12-04-2004 |
| | | JP 3716266 B2 | 16-11-2005 |
| | | JP H06157770 A | 07-06-1994 |
| | | JP 2004174496 A | 24-06-2004 |
| | | US 5471037 A | 28-11-1995 |
| EP 2287228 A2 | 23-02-2011 | AU 2006295280 A1 | 05-04-2007 |
| | | BR PI0615844 A2 | 31-05-2011 |
| | | CA 2622118 A1 | 05-04-2007 |
| | | CN 101263178 A | 10-09-2008 |
| | | CN 102898616 A | 30-01-2013 |
| | | EP 1940915 A2 | 09-07-2008 |
| | | EP 2287228 A2 | 23-02-2011 |
| | | JP 5075126 B2 | 14-11-2012 |
| | | JP 2009507984 A | 26-02-2009 |
| | | KR 20080063752 A | 07-07-2008 |
| | | TW I397557 B | 01-06-2013 |
| | | US 2007060735 A1 | 15-03-2007 |
| | | WO 2007037824 A2 | 05-04-2007 |
| JP 2019202477 A | 28-11-2019 | JP 6512344 B1 | 15-05-2019 |
| | | JP 2019202477 A | 28-11-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007037824 A2
- EP 1391472 A1
- WO 2007101807 A1
- WO 2021122303 A1
- US 7795359 B
- EP 2287228 A2
- WO 2021122284 A1
- WO 2010055034 A1
- US 7795359 B2